# EUROPEAN PATENT APPLICATION

(11) **EP 4 572 429 A1**
(43) Date of publication of application: **18.06.2025**
(21) Application number: 22954913.4
(22) Date of filing: 08.08.2022
(51) Int. Cl.: H04W 52/04, H04W 16/26

(54) **COMMUNICATION DEVICE AND COMMUNICATION METHOD**

(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/030343
(87) International publication number: WO 2024/033991

(57) **Abstract**

This communication device comprises: a control unit that, when switching transmission power for a communication operation executed by the communication device between a base station and a terminal to first power, sets a specific period before a first period in which the first power is used, and switches the transmission power to the first power; and a communication unit that transmits a signal according to the first power.

## Description

### Technical Field

The present disclosure relates to a communication apparatus and a communication method.

### Background Art

In Universal Mobile Telecommunication System (UMTS) networks, Long Term Evolution (LTE) has been specified with the aim of achieving higher data rates, lower latency, and other improvements. Future systems of LTE have also been studied for achieving a broader bandwidth and a higher speed based on LTE. Successor systems to LTE include, for example, systems referred to as LTE-Advanced (LTE-A), Future Radio Access (FRA), 5th generation mobile communication system (5G), 5G plus (5G+), Radio Access Technology (New-RAT), New Radio (NR), and the like.

Further, in NR, a communication apparatus (which may be referred to as a relay apparatus) that relays signals between a user terminal (User Equipment (UE), which may be simply referred to as a terminal) and a radio base station (which may be simply referred to as a base station) has been studied.

### Citation List

### Non-Patent Literature

NPL 1
   3GPP TSG RAN WG1 #109-e, R1-2204534, Discussion on operation scenarios for NCR,

### Summary of Invention

However, there is room for consideration regarding the appropriate control of a variation (switching) in an operation related to communication in a communication apparatus that performs relaying.

An aspect of the present disclosure provides a communication apparatus and a communication method each capable of appropriately controlling a variation (switching) in an operation related to communication.

A communication apparatus according to an aspect of the present disclosure includes: a control section that configures, in a case where transmission power related to a communication operation executed by the communication apparatus between a base station and a terminal is switched to first power, a specific period before a first period in which the first power is used, and switches the transmission power to the first power; and a communication section that transmits a signal in accordance with the first power.

A communication method according to an aspect of the present disclosure includes: configuring, by a communication apparatus, in a case where transmission power related to a communication operation executed by the communication apparatus between a base station and a terminal is switched to first power, a specific period before a first period in which the first power is used, and switching the transmission power to the first power; and transmitting, by the communication apparatus, a signal in accordance with the first power.

### Brief Description of Drawings

FIG. 1 is a diagram illustrating an exemplary radio communication system according to an embodiment of the present disclosure;
FIG. 2 is a diagram illustrating exemplary frequency ranges used in a radio communication system according to an embodiment of the present disclosure;
FIG. 3 is a diagram illustrating an exemplary configuration of a radio frame, a subframe, and a slot used in a radio communication system according to an embodiment of the present disclosure;
FIG. 4 is a diagram illustrating an exemplary configuration of NCR 300;
FIG. 5 is a diagram illustrating examples of a former power period and a latter power period that are continuous;
FIG. 6 is a diagram illustrating examples of a former power period and a latter power period that are not continuous;
FIG. 7 is a diagram illustrating examples of a former beam period and a latter beam period that are continuous;
FIG. 8 is a diagram illustrating examples of a former beam period and a latter beam period that are not continuous;
FIG. 9 is a diagram illustrating an example of a relationship between side control information and a certain beam time;
FIG. 10 is a diagram illustrating examples of Proposal 3;
FIG. 11 is a diagram illustrating examples of beam indication considering a gap period;
FIG. 12 is a block diagram illustrating an exemplary configuration of a base station according to an embodiment of the present disclosure;
FIG. 13 is a block diagram illustrating an exemplary configuration of a terminal according to an embodiment of the present disclosure;
FIG. 14 is a block diagram illustrating an exemplary configuration of a relay apparatus according to an embodiment of the present disclosure;
FIG. 15 is a diagram illustrating an exemplary hardware configuration of a base station, a relay apparatus, and a terminal according to an embodiment of the present disclosure; and
FIG. 16 is a diagram illustrating an exemplary configuration of a vehicle.

### Description of Embodiments

Hereinafter, an embodiment of the present disclosure will be described with reference to the drawings. Note that the embodiment described below are merely examples, and the embodiment to which the present disclosure is applied are not limited to the following embodiment.

Further, in the embodiment of the present disclosure described below, the terms such as Synchronization signal (SS), Primary SS (PSS), Secondary SS (SSS), Physical broadcast channel (PBCH), Physical random access channel (PRACH), Physical Downlink Control Channel (PDCCH), Physical Downlink Shared Channel (PDSCH), Physical Uplink Control Channel (PUCCH), Physical Uplink Shared Channel (PUSCH), and the like, which are used in 5G New Radio (NR), are used. This is for the sake of convenience in description, and the same signals, functions, and the like may be called by other names.

Further, in the embodiment of the present disclosure, the duplex method may be a Time Division Duplex (TDD) method, a Frequency Division Duplex (FDD) method, or another method (for example, a Flexible Duplex method).

Further, in the embodiment of the present disclosure, the phrase "a radio parameter or the like is "configured,"" may refer to pre-configuration of a predetermined value or configuration of a radio parameter that is indicated from a base station or a terminal.

### <Radio Communication System>

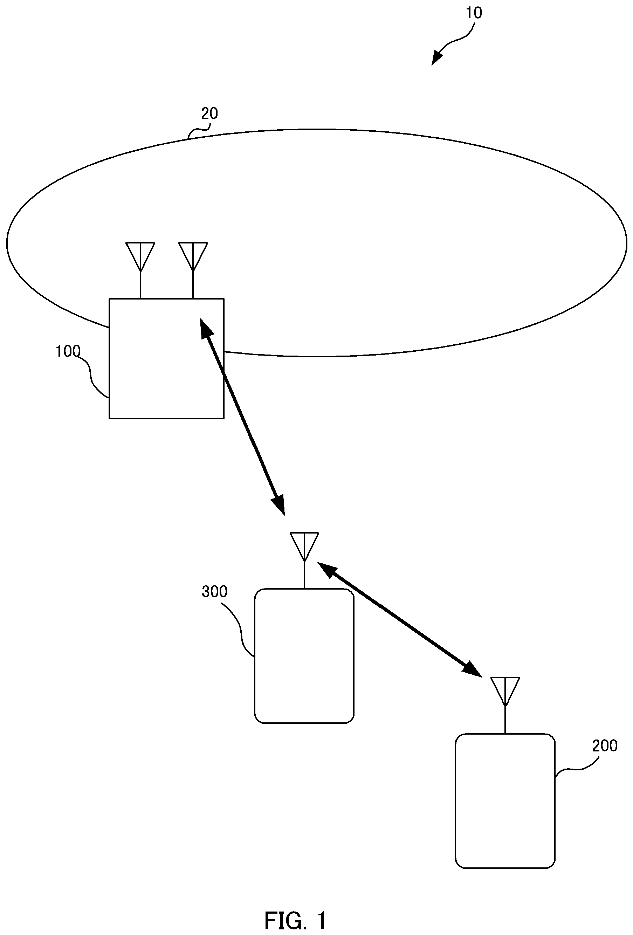

FIG. 1 is a diagram illustrating exemplary radio communication system 10 according to an embodiment of the present disclosure. Radio communication system 10 is a radio communication system in accordance with 5G NR, and includes Next Generation-Radio Access Network 20 (hereinafter, referred to as NG-RAN 20) and terminal 200 (hereinafter, also referred to as user equipment (UE) 200).

Note that radio communication system 10 may be a radio communication system in accordance with a method called Beyond 5G, 5G Evolution, or 6G.

NG-RAN 20 includes base station 100 (hereinafter also referred to as gNB 100). Note that the number of gNBs and UEs is not limited to the example shown in FIG. 1.

NG-RAN 20 actually includes a plurality of NG-RAN nodes, specifically, gNBs (or ng-eNBs), and is connected to a core network (5GC, not illustrated) in accordance with 5G. Note that NG-RAN 20 and 5GC may be simply referred to as "network." Further, in the following, gNB may be read as a network (NW).

For example, gNB 100 is a base station in accordance with 5G, and performs radio communication with UE 200 in accordance with 5G. Further, in the example illustrated in FIG. 1, relay apparatus 300 that relays signals between gNB 100 and UE 200 is illustrated. Relay apparatus 300 performs a relay operation of, for example, transmitting a signal received from gNB 100 to UE 200 and transmitting a signal received from UE 200 to gNB 100. Note that the term "relaying" may be replaced with the term "forwarding." Further, the term "operation" may be replaced with the term "processing," "control," or the like. Further, relay apparatus 300 which is being studied in NR will be described later.

gNB 100 and UE 200 may support Multiple-Input Multiple-Output (MIMO) that generates a beam with higher directivity by controlling a radio signal transmitted from a plurality of antenna elements, carrier aggregation (CA) that uses a plurality of component carriers (CCs) in a bundled manner, and dual connectivity (DC) that performs communication between UE and each of two NG-RAN nodes.

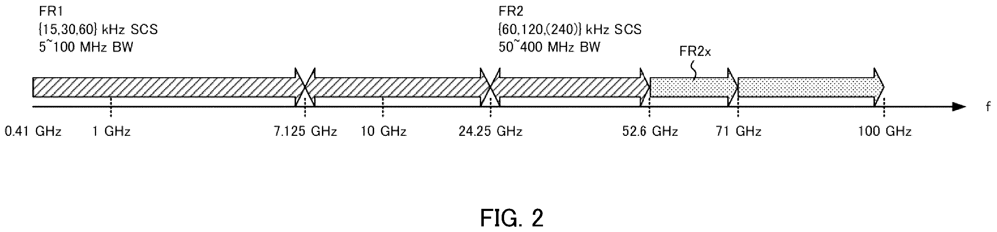

Further, radio communication system 10 may support a plurality of frequency ranges (FRs). FIG. 2 is a diagram illustrating examples of FRs used in radio communication system 10. As illustrated in FIG. 2, radio communication system 10 may support FR1 and FR2. The frequency band of each FR is, for example, as follows.
- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 to 100 MHz may be used. FR2 is a higher frequency than FR1, and an SCS of 60 kHz or 120 kHz (240 kHz may be included) is used, and a bandwidth (BW) of 50 to 400 MHz may be used.

Note that SCS may be interpreted as numerology. Numerology is defined in 3GPP TS 38.300 and corresponds to one subcarrier spacing in the frequency domain.

Further, radio communication system 10 may support a frequency band higher than the frequency band of FR2. Specifically, radio communication system 10 may support a frequency band exceeding 52.6 GHz and up to 114.25 GHz. Such a high frequency band may be referred to as "FR2x" for convenience. In a case where a band exceeding 52.6 GHz is used, Cyclic Prefix - Orthogonal Frequency Division Multiplexing (CP-OFDM)/ Discrete Fourier Transform - Spread - Orthogonal Frequency Division Multiplexing (DFT-S-OFDM) with a larger SCS may be applied.

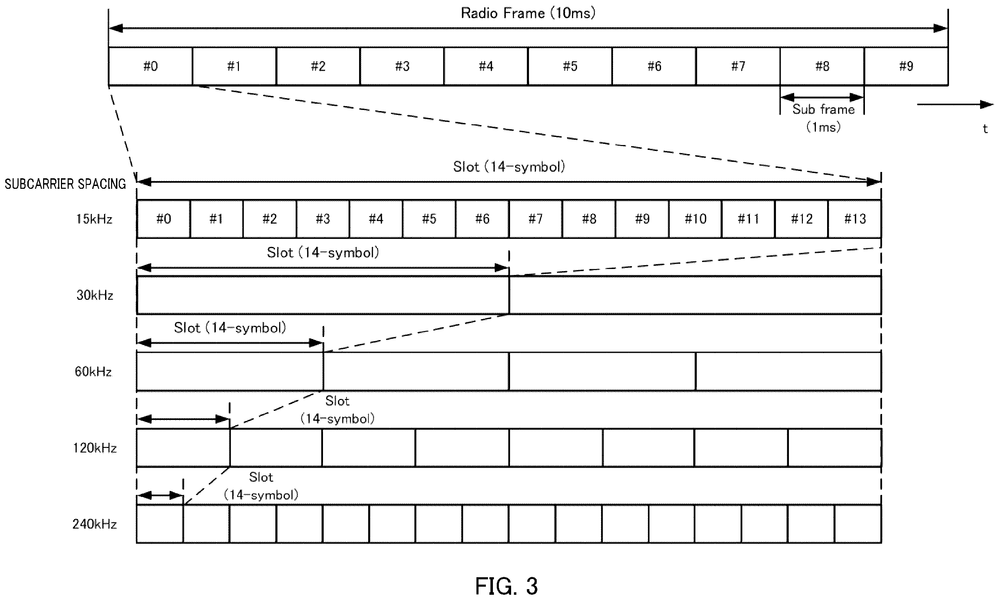

FIG. 3 is a diagram illustrating an exemplary configuration of a radio frame (system frame), a subframe, and a slot used in radio communication system 10. As illustrated in FIG. 3, one slot is configured with 14 symbols, and the symbol duration (and the slot duration) becomes shorter as the SCS becomes larger (wider). Note that the SCS is not limited to the durations (frequencies) illustrated in FIG. 3. For example, 480 kHz, 960 kHz, or the like may be used as the SCS.

Further, the number of symbols constituting one slot is not necessarily 14 symbols (for example, the number of symbols may be 28 or 56 symbols). Further, the number of slots per subframe may vary depending on the SCS.

Note that the time direction (t) illustrated in FIG. 3 may be referred to as a time domain, a symbol period, a symbol time, or the like. Further, the frequency direction may be referred to as a frequency domain, a resource block, a subcarrier, a bandwidth part (BWP), or the like.

As a downlink (DL) signal, gNB 100 transmits control information, configuration information, and the like of gNB 100 to UE 200.

Further, for example, gNB 100 receives, as an uplink (UL) signal, control information of gNB 100, a data signal, information on the processing capability of UE 200 (terminal capability (information); for example, UE capability), and the like from UE 200.

Relay apparatus 300 performs a transfer operation of transferring the DL signal to UE 200. Further, relay apparatus 300 performs a transfer operation of transferring the UL signal to gNB 100. Note that, in the following, the UL signal received by gNB 100 from UE 200 and/or the DL signal received by UE 200 from gNB 100 may be a signal relayed by relay apparatus 300.

UE 200 is a communication apparatus with a radio communication function, such as a smartphone, a mobile phone, a tablet, a wearable terminal, or a communication module for Machine-to-Machine (M2M).

UE 200 receives a control signal or a data signal from gNB 100 in DL and transmits a control signal or a data signal to gNB 100 in UL, thereby utilizing various communication services provided by radio communication system 10. Further, UE 200 receives various reference signals transmitted from gNB 100 and performs measurement of the propagation path quality based on the reception results of the reference signals.

The channel used for DL signal transmission includes, for example, a data channel and a control channel. For example, the data channel may include a Physical Downlink Shared Channel (PDSCH), and the control channel may include a Physical Downlink Control Channel (PDCCH). For example, gNB 100 transmits control information to UE 200 using PDCCH and transmits a DL data signal using PDSCH. Note that PDSCH is an example of a downlink shared channel, and PDCCH is an example of a downlink control channel. Note that the PDCCH may be read as downlink control information (DCI), control information, or the like transmitted in the PDCCH.

The reference signal included in the DL signal may include, for example, at least one of a demodulation reference signal (DMRS), a phase tracking reference signal (PTRS), a channel state information-reference signal (CSI-RS), a sounding reference signal (SRS), and a positioning reference signal (PRS). For example, reference signals such as DMRS and PTRS are used for demodulation of a data signal in DL and are transmitted using PDSCH.

The channel used for UL signal transmission includes, for example, a data channel and a control channel. For example, the data channel may include a Physical Uplink Shared Channel (PUSCH), and the control channel may include a Physical Uplink Control Channel (PUCCH). For example, UE 200 transmits control information using PUCCH and transmits a UL data signal using PUSCH. Note that PUSCH is an example of an uplink shared channel, and PUCCH is an example of an uplink control channel. The shared channel may also be referred to as a data channel. Note that PUSCH or PUCCH may be read as uplink control information (UCI), control information, or the like transmitted in PUSCH or PUCCH.

The reference signal included in the UL signal may include, for example, at least one of DMRS, PTRS, CSI-RS, SRSRS, and PRS for position information. For example, reference signals such as DMRS and PTRS are used for demodulation of UL data signals and are transmitted using PUSCH.

### <Relay Apparatus>

In Release 18 (Rel-18) of 3GPP, a new study item on NR Network-controlled Repeater is being considered. Hereinafter, an NR Network-controlled Repeater is abbreviated as NCR. NCR may correspond to, for example, relay apparatus 300 of FIG. 1. Hereinafter, NCR is sometimes referred to as NCR 300.

In NCR, unlike a conventional amplify and forward repeater, at least one of the control of the timing of transmission, the control of the timing of reception, the control of whether to perform a DL operation or a UL operation (for example, switching), and the control of turning ON and OFF the operation of NCR may be executed. Further, power control may be performed in NCR. Further, in NCR, it is possible to control the directivity in the transmission operation and/or the reception operation. That is, in NCR, the beam to be transmitted and/or the beam to be received may be controlled.

Hereinafter, illustratively, as an example of the control of the communication operation of NCR, the control of power and the control of a beam will be described.

For example, the following scenarios and/or assumptions have been considered with respect to NCR.

NCR may be an inband radio frequency (RF) repeater used to extend the network coverage of the FR1 and FR2 bands. Note that, in the study on FR2, the use of FR2 in both outdoor and outdoor to indoor (O2I) scenarios may be prioritized.

At present, a single-hop fixed NCR is being considered.

NCR may be transparent to the UE.

NCR may maintain and control the link between the gNB and the repeater and the link between the repeater and the UE simultaneously.

The efficiency of the cost of NCR is a consideration for NCR.

Further, the following examples are given as side control information.
- Information on beamforming
- Information on the timing for aligning the boundary between transmission and reception of NCR
- Information on TDD configuration for UL and/or DL
- Information on control of ON and OFF of NCR for efficient interference management and energy efficiency improvement (hereinafter referred to as ON-OFF control information)
- Information on power control for efficient interference management

Note that, among the examples of the side control information described above, the information necessary for NCR is under consideration. Further, in this study, it may be assumed that the NCR operates at the maximum transmission power.

Further, a method of L1/L2 (layer 1/layer 2) signaling for transmitting the side control information and a configuration of the L1/L2 signaling are under consideration.

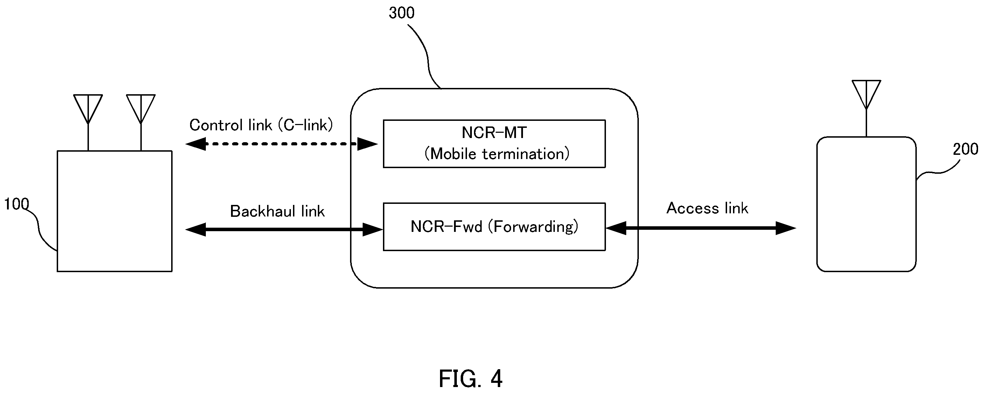

FIG. 4 is a diagram illustrating an exemplary configuration of NCR 300. NCR 300 is present between UE 200 and gNB 100. Note that, NCR 300 may be present between UE 200 and gNB 100 in the real space, or need not be present between UE 200 and gNB 100 in the real space.

NCR 300 receives a UL signal transmitted from UE 200 to gNB 100 and transmits the UL signal to the destination gNB 100. In other words, NCR 300 transfers the UL signal transmitted from UE 200 to gNB 100 to the destination gNB 100. Further, NCR 300 receives a DL signal transmitted from gNB 100 to UE 200 and transmits the DL signal to the destination UE 200. In other words, NCR 300 transfers a signal transmitted from gNB 100 to UE 200 to the destination UE 200.

Further, NCR 300 may operate based on control information received from gNB 100.

As illustrated in FIG. 4, the link between NCR 300 and UE 200 may be referred to as an access link. Further, as illustrated in FIG. 4, two links exist between NCR 300 and gNB 100. Of the two links, the link that transmits a signal received from UE 200 to gNB 100 may be referred to as a backhaul link. Note that, in the backhaul link, NCR 300 may receive a signal for UE 200 from gNB 100. Of the two links, the link for exchanging information between gNB 100 and NCR 300 may be referred to as a control link (hereinafter, sometimes referred to as a C-link). For example, in the control link, exchange of side control information may be performed.

Note that, in FIG. 4, an example is illustrated in which gNB 100 included in the C-link and gNB 100 included in the backhaul link are the same, but gNB 100 included in the C-link and gNB 100 included in the backhaul link may be different from each other.

Further, the frequency (for example, carrier or frequency band) used for communication in the C-link, the frequency used for communication in the backhaul link, and the frequency band used for communication in the access link are not particularly limited. These three frequencies may be the same as one another, or at least two of the three frequencies may be different from each other. Further, one of the three frequencies may include another one of the frequencies.

Further, for each of the three links, C-link, backhaul link, and access link, the link in the direction toward gNB 100 may be referred to as an uplink, and the link in the direction opposite to the uplink may be referred to as a downlink. In this case, the frequency used for uplink communication and the frequency used for downlink communication in each of the three links may be the same as each other or may be different from each other.

NCR 300 in FIG. 4 includes two functional entities referred to as NCR-MT and NCR-Fwd.

NCR-MT is a functional entity that communicates with gNB 100 via a control link (C-link) and enables information exchange with gNB 100. The information exchange with gNB 100 may be, for example, transmission and reception of side control information. Further, the control link may be based on the Uu interface of NR.

Note that, in NCR-MT, the side control information may include at least information for controlling NCR-Fwd. Further, the side control information may be indicated by at least one signaling of radio resource control (RRC), Medium Access Control Control Element (MAC CE), and downlink control information (DCI).

NCR-Fwd is a functional entity that transfers signals between gNB and UE via a backhaul link and an access link. For example, NCR-Fwd performs amplification and transfer of a UL radio frequency (RF) signal. Further, the amplification and transfer of the RF signal in the DL are performed. Note that the operation of NCR-Fwd may be controlled in accordance with the side control information received from gNB 100.

For the NCR illustrated in FIG. 4, in RAN1#109, the following points were agreed upon regarding transmission and reception in the C-link of NCR and transmission and reception in the backhaul link of NCR.

It was agreed that the UL of the C-link and the UL of the backhaul link are executed by time division multiplexing (TDM). On the other hand, simultaneous transmission of the UL of the C-link and the UL of the backhaul link depends on the function or capability of NCR. That is, NCR may have the capability to perform simultaneous transmission of the UL of the C-link and the UL of the backhaul link.

Further, the DL of the C-link and the DL of the backhaul link may be performed simultaneously or may be performed by TDM.

Note that, multiplexing using a TDM scheme or the like is controlled by gNB in consideration of the capability of NCR. For example, the TDM between the UL of the C-link and the UL of the backhaul link is controlled by gNB in consideration of the capability of NCR.

Note that, since the UL transmission in the C-link executed by NCR is executed by NCR-MT, which is a functional entity, the UL transmission is sometimes referred to as "NCR-MT C-link UL Tx." Further, since the UL transmission in the backhaul link executed by NCR is executed by NCR-Fwd, which is a functional entity, the UL transmission is sometimes referred to as "NCR-Fwd backhaul link UL Tx." Note that the UL transmission in the backhaul link executed by NCR may be coordinated with the UL reception in the access link. In a case where the UL transmission is coordinated with the UL reception in the access link, "NCR-Fwd backhaul link UL Tx" may include UL transmission in the backhaul link and UL reception in the access link.

Further, similarly for DL, the DL reception in the C-link executed by NCR is sometimes referred to as "NCR-MT C-link DL Rx," and the DL reception in the backhaul link executed by NCR is sometimes referred to as "NCR-Fwd backhaul link DL Rx." Note that the DL reception in the backhaul link executed by NCR may be coordinated with the DL transmission in the access link. In a case where the DL reception is coordinated with the DL transmission in the access link, "NCR-Fwd backhaul link DL Rx" may include DL reception in the backhaul link and DL transmission in the access link in NCR.

In addition, regarding NCR illustrated in FIG. 4, it was agreed in 3GPP RAN1 #109 that control information (or control parameter) related to the communication operation of NCR is controlled. For example, in the agreement in 3GPP RAN1 #109, it was agreed that the power and/or amplification gain of NCR-Fwd may be controlled by the NW, and that the beam of NCR for an access link may be controlled.

### <Consideration>

In relation to the agreement on NCR, there is room for various considerations in the control of control information (for example, power and/or beam control parameters) for the communication operation of NCR.

For example, there is room for consideration of a gap for switching (for example, a transient period) in a case where NCR switches power, which is an example of the control information. For example, in a case where this gap is not considered, inconsistency in recognition of power possibly occurs between the side that has transmitted the switching indication (for example, NW) and the NCR that has received the indication. Due to this inconsistency, for example, the NW (for example, gNB) possibly assumes that the NCR uses the indicated power even though the NCR does not use the indicated power, and the communication operation between the NCR and the gNB is possibly not appropriately controlled.

However, at present, only controlling power (for example, switching of power) is defined, and specific control for the gap for switching is not defined. Note that the specific control will be described in Proposal 1 described later.

Further, for example, there is room for consideration of a gap for switching (for example, a transient period) in a case where NCR switches beams, which are examples of the control information. For example, in a case where this gap is not considered, inconsistency in recognition of the beam possibly occurs between the side that has transmitted the switching indication (for example, NW) and the NCR that has received the indication. Due to this inconsistency, for example, the NW possibly assumes that the NCR uses the indicated beam even though the NCR does not use the indicated beam, and the communication operation between the NCR and the gNB is possibly not appropriately controlled.

However, at present, only controlling beams (for example, switching of beams) is defined, and specific control for the gap for switching is not defined. Note that the specific control will be described in Proposal 2 described later.

For example, there is room for consideration of a gap (for example, a time width) between the time when NCR receives an indication to switch beams and the time when NCR actually enters a state based on the indication (for example, a state in which the indicated beam is used). For example, in a case where this gap is not considered, inconsistency in recognition of the beam possibly occurs between the side that has transmitted the indication (for example, NW) and the NCR that has received the indication. Due to this inconsistency, for example, the NW (for example, gNB) possibly assumes that the NCR uses the indicated beam even though the NCR does not use the indicated beam, and the communication operation between the NCR and the gNB is possibly not appropriately controlled.

However, at present, it is only defined that beams may be controlled, and there is no specific definition regarding the control for the gap (for example, time width) between the time when the NCR receives a beam indication and the time when the NCR actually enters the state based on the indication. Note that the specific control will be described in Proposal 3 described later.

With respect to the above-described considerations, in the present embodiment, NCR provides, in a case where the NCR changes the state (for example, a state of using certain power and/or a certain beam) related to the communication operation performed by the NCR to a certain specific state, a specific period before the period of the specific state and changes the state to the specific state. The specific period corresponds to, for example, the gap described above. Providing a specific period allows the transfer operation to be appropriately controlled. Note that the term "period" may be replaced with other terms such as time interval, interval, gap, and the like.

Hereinafter, each proposal will be described.

### <Proposal 1>

In Proposal 1, a transient period in a case where the power of NCR switches from certain power to another power is defined. As described later, the transient period may be indicated to the NW (for example, gNB) as a capability of NCR, or the gNB may instruct (indicate) the transient period to the NCR. Further, the transient period may be predetermined between the gNB and the NCR. Thus, the gNB and the NCR can share the transient period for the power switching, can prevent inconsistency in the power recognition, and can appropriately control the communication operation. Note that the term "transient period" may be replaced with another expression such as a transient state period, a transition period, a state transition period, or the like.

As described above, in RAN1#109 of 3GPP, it was agreed that the power and/or amplification gain of NCR-Fwd may be controlled by the NW.

For a normal UE, the requirement for the transmission power of the UE is specified in 3GPP TS 38.101 (RAN4 spec. of requirement of UE). In this specification, a time mask for the transmission power is defined. The time mask for the transmission power defines a transient period that is allowed between transmissions when a variation in power is applied. Note that, the power in the ON state may be the average power in one slot excluding any transient period. Further, a normal UE may be, for example, a UE that does not have a relay function (transfer function).

For the control of power of NCR, the same cases as those of the normal UE described above should be considered. That is, for the control of power of NCR, the transient period for the power switching should be considered. Thus, as described above, Proposal 1 defines a transient period in which the power of NCR switches from certain power to another power. Note that Proposal 1 may be applied to a UE in the same manner.

Note that the transient period in which the power is switched may be shorter than a CP (cyclic prefix) or may be shorter than a symbol. For example, in a case where the transient period is shorter than a CP or a symbol, Proposal 1 may be a proposal for a consideration in RAN4 only rather than a consideration in RAN1 of 3GPP. On the other hand, the transient period may be equal to or longer than CP, or may be equal to or longer than a symbol. For example, in a case where the transient period is equal to or longer than a CP or equal to or longer than a symbol, Proposal 1 may be a proposal for a consideration in RAN1 and/or a consideration in RAN4 of 3GPP.

Note that the power control in the present embodiment may mean the control of power of NCR-Fwd, or may mean the control of power of the entire NCR including NCR-Fwd. In other words, the control of power of NCR and the control of power of NCR-Fwd may be replaced with each other. Further, for example, the power in the present embodiment may correspond to the amplification gain in the amplification processing of NCR-Fwd. Alternatively, the power in the present embodiment may correspond to the transmission power of NCR-Fwd. That is, in the present embodiment, the power switching may correspond to the switching of the amplification gain in the amplification processing of NCR-Fwd, or may correspond to the switching of the transmission power of NCR-Fwd.

Further, Proposal 1 may be applied to both the power of DL in NCR-Fwd and the power of UL in NCR-Fwd. Further, Proposal 1 may be applied only to the power of DL in NCR-Fwd. For example, Proposal 1 may be applied to the power of DL in NCR-Fwd and need not be applied to the power of UL in NCR-Fwd. Further, Proposal 1 may be applied only to the power of UL in NCR-Fwd. For example, Proposal 1 may be applied to the power of UL in NCR-Fwd and need not be applied to the power of DL in NCR-Fwd.

Here, the power of DL may correspond to the amplification gain in transfer in DL or may correspond to the transmission power in DL. The power of UL may correspond to an amplification gain in transfer in UL or may correspond to the transmission power in UL.

Further, the power control in the present embodiment may support the control of power of only NCR-Fwd. In this case, the power control in the present embodiment may support the control of power of NCR-Fwd and need not support the control of power of NCR-MT. Further, the power control in the present embodiment may support both the control of power of NCR-Fwd and NCR-MT. Further, the power control in the present embodiment may support the control of power of only NCR-MT.

Further, the power control in the present embodiment may be applied to at least two of the power of UL in NCR-Fwd, the power of DL in NCR-Fwd, and the power of UL in NCR-MT.

Note that, in the following description, in the power switching, the power before switching may be referred to as power before switching, power of the former, or former power. Further, in the power switching, the power after switching may be referred to as power after switching, power of the latter, or latter power.

Further, the transmission using the power before switching may be referred to as transmission before switching, transmission of the former, or former transmission. Further, the transmission using the power after switching may be referred to as transmission after switching, transmission of the latter, or latter transmission.

Further, the period in which the power before switching is used may be referred to as a power period before switching, a power period of the former, or a former power period. Further, the period in which the power after switching is used may be referred to as a power period after switching, a power period of the latter, or a latter power period. Here, the use of the power may correspond to transmitting a signal having the power, amplifying a signal having the power to transmit the signal, and the like.

### <Proposal 1-1>

In Proposal 1-1, continuous transmission accompanied by power variation is assumed. The expression "power variation" may be replaced with an expression such as change in power, transition in power, or switching of power. In other words, it is assumed that the former power period and the latter power period are continuous with each other in the power switching. Then, an exemplary definition of a transient period in a case where the power is switched from the former power to the latter power in the case based on this assumption will be described.

For example, an indication that the former power period and the latter power period are continuous may be indicated to NCR.

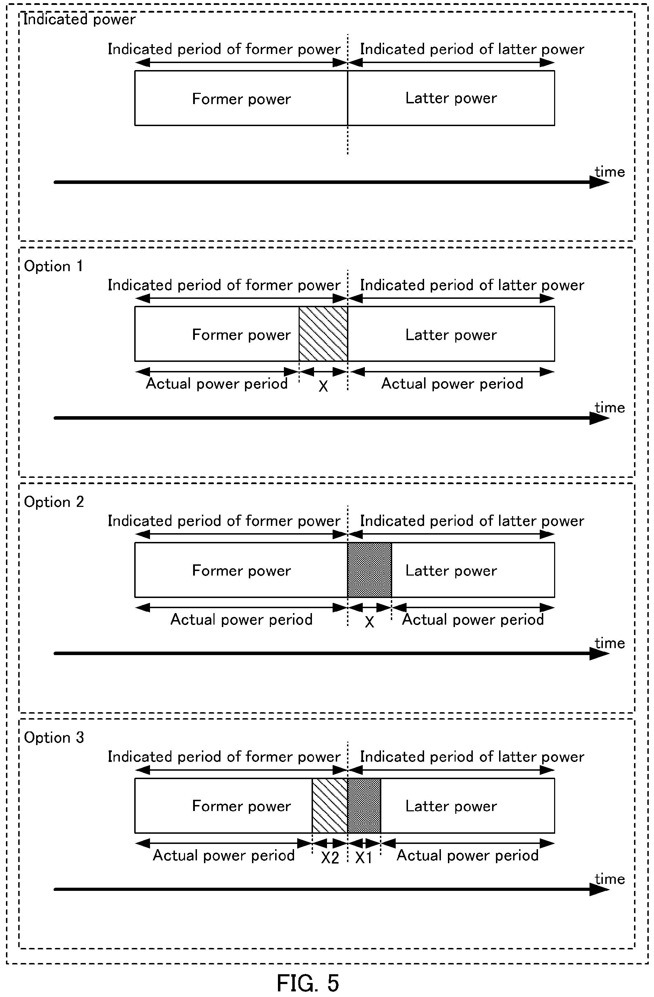

For the transient period in the power switching, three options will be described below with reference to FIG. 5. For the transient period in a case where the former power period and the latter power period are continuous, any of the three options may be adopted.

FIG. 5 is a diagram illustrating examples of a former power period and a latter power period that are continuous. In the example of FIG. 5, the former power period and the latter power period in a case where the power period transitions from the former power period to the latter power period, that is, in a case where the power is switched from the former power to the latter power, are illustrated. For example, FIG. 5 illustrates the indicated former power period and the indicated latter power period, and cases where Options 1 to 3 are applied to the indicated former power period and the indicated latter power period.

In the indicated power period ("Indicated power" in the drawing), it is shown that the indicated former power period and the indicated latter power period are continuous with each other. Here, the indicated former power period (or the indicated latter power period) may be explicitly indicated or may be implicitly indicated. For example, NCR may receive an indication of former power and an indication of the former power period, and may use the former power in the period based on the indication. Alternatively, NCR may start the former power period in response to the reception of the indication of the former power, and may continue the former power period until receiving the indication of latter power. Note that three options applied to this pattern will be described below.

### <Option 1 of Proposal 1-1>

In Option 1 of Proposal 1-1, the transient period is defined within the indicated former power period. For example, as illustrated in the example of Option 1 in FIG. 5, the transient period is a last X time interval of the indicated former power period. In Option 1 of Proposal 1-1, the actual former power period may be a section excluding the last X time interval from the indicated former power period.

Note that, NCR-Fwd may be assumed to use the former power in the actual former power period. Alternatively, NCR-Fwd may be required to use the former power in the actual former power period. Note that the request to NCR-Fwd to use the former power may be based on the actual former power period. That is, the request to NCR-Fwd for the power in the former transmission may be based on the actual former power period. In other words, NCR-Fwd need not be assumed to use the former power and need not be required to use the former power in the transient period. Note that, during the transient period, NCR may be in an ON state (or an active state). In this case, NCR may be assumed or required to use the former power in the transient period.

Here, X, which is a time interval corresponding to the transient period, may be defined in advance, may be configured, or may be the subject of the Capability of NCR.

In Option 1 of Proposal 1-1, the transient period is defined within the indicated former power period. Thus, NCR and gNB can configure the former power period and the latter power period in consideration of the transient period, and therefore, an appropriate communication operation can be controlled. Further, by defining the transient period within the indicated former power period, the indicated latter power period can be secured as the actual latter power period. Further, defining the transient period within the indicated former power period shortens the length of the former power period, and thus the power consumption of NCR can be suppressed, for example, in a case where the former power is greater than the latter power.

### <Option 2 of Proposal 1-1>

In Option 2 of Proposal 1-1, the transient period is defined within the indicated latter power period. For example, as illustrated in the example of Option 2 in FIG. 5, the transient period is a first X time interval of the indicated latter power period. In Option 2 of Proposal 1-1, the section excluding the first X time interval from the indicated latter power period may be the actual latter power period.

Note that, NCR-Fwd may be assumed to use the latter power in the actual latter power period. Alternatively, NCR-Fwd may be required to use the latter power in the actual latter power period. Note that the request to NCR-Fwd to use the latter power may be based on the actual latter power period. That is, the request to NCR-Fwd for the power in the latter transmission may be based on the actual latter power period. In other words, NCR-Fwd need not be assumed to use the latter power or required to use the latter power in the transient period. Note that, during the transient period, NCR may be in an ON state (or an active state). In this case, NCR may be assumed or required to use the latter power in the transient period.

Here, X, which is a time interval corresponding to the transient period, may be defined in advance, may be configured, or may be the subject of the Capability of NCR.

In Option 2 of Proposal 1-1, the transient period is defined within the indicated latter power period. Thus, NCR and gNB can configure the former power period and the latter power period in consideration of the transient period, and therefore, an appropriate communication operation can be controlled. Further, by defining the transient period within the indicated latter power period, the indicated former power period can be secured as the actual former power period. Further, defining the transient period within the latter power period shortens the length of the latter power period, and thus the power consumption of NCR can be suppressed, for example, in a case where the latter power is greater than the former power.

### <Option 3 of Proposal 1-1>

In Option 3 of Proposal 1-1, a part of the transient period is defined within the indicated former power period. In Option 3 of Proposal 1-1, a part of the transient period is defined within the indicated latter power period. In other words, the transient period is defined as being divided into a period within the indicated former power period and a period within the indicated latter power period. The partial transient period defined in the indicated former power period and the partial transient period defined in the indicated latter power period may be temporally continuous.

The transient period in the latter power period is the first X1 time interval of the indicated latter power period. The transient period in the former power period is the last X2 time interval of the indicated former power period. In this case, the actual former power period is a period excluding the transient period from the indicated former power period, and the actual latter power period is a period excluding the transient period from the indicated latter power period. In the example of Option 3 in FIG. 5, the actual former power period is a period excluding the last X2 time interval from the indicated former power period, and the actual latter power period is a period excluding the first X1 time interval from the indicated latter power period.

Note that, NCR-Fwd may be assumed to use the former power in the actual former power period. NCR-Fwd may be assumed to use the latter power in the actual latter power period. Alternatively, NCR-Fwd may be required to use the former power in the actual former power period. Alternatively, NCR-Fwd may be required to use the latter power in the actual latter power period. Note that the request to NCR-Fwd for the transmission power may be based on the actual power period. For example, the request to NCR-Fwd for the power in the former transmission may be based on the actual former power period. Further, the request to NCR-Fwd for the power in the latter transmission may be based on the actual latter power period. In other words, NCR-Fwd need not be assumed to use the former power or the latter power in the transient period. NCR-Fwd need not be required to use the former power or the latter power in the transient period.

Here, X1 and X2, which are time intervals corresponding to the transient period, may be defined in advance, may be configured, or may be the subject of the Capability of NCR. Alternatively, X indicating the sum of X1 and X2 may be defined in advance, may be configured, or may be the subject of the Capability of NCR. In this case, X = X1 + X2 may be applied. Further, in this case, X1 = X2 = 0.5X may be applied, or X1 and X2 may be determined from X according to a specific ratio. Alternatively, X1 and X2 may depend on the implementation of NCR. For example, the ratio between X1 and X2 may be defined by the implementation of NCR, and X1 and X2 may be determined by considering the ratio with respect to a predetermined X.

In Option 3 of Proposal 1-1, the transient period is defined within the indicated former power period and the indicated latter power period. Thus, NCR and gNB can configure the former power period and the latter power period in consideration of the transient period, and thus an appropriate communication operation can be controlled.

Note that, in each option of Proposal 1-1 described above, the unit of the value (for example, X, X1, and X2) related to the transient period may be at least one of a slot, a symbol, a subframe, a second, a millisecond, and a microsecond.

Note that the option applied in each option of Proposal 1-1 described above may be defined in advance or may be configured. Alternatively, the applicability of each option may be the subject of the capability of NCR.

As described above, Proposal 1-1 defines the transient period in a case where the power of NCR is switched. Thus, it is possible to consider the time required for the power of NCR to be switched, and the switching is performed at an appropriate time, thereby enabling the communication operation to be appropriately controlled.

For example, by considering the time required for switching, it is possible to avoid inconsistency in power recognition between the side that has transmitted the switching indication (for example, NW) and the NCR that has received the indication. Thus, for example, it is possible to avoid a situation in which the gNB assumes that the power of the NCR is the former power even though the power of the NCR is not the former power, and the transfer operation between the NCR and the gNB cannot be appropriately controlled.

For example, in Proposal 1-1, the NCR configures a specific period before a first period (for example, the latter power period) in which the first power is used in a case where the transmission power is switched to the first power (for example, the latter power), and switches the transmission power to the first power. Further, for example, in Proposal 1-, the NCR configures, in a case where the NCR switches the state from a second state (for example, a state in which the latter power is used) that is different from the first state (for example, a state in which the former power is used) to the first state, a specific period (for example, a transient period) between the period of the second state (for example, the latter power period) and the period of the first state (the former power period). Note that the specific period may be defined based on the time required for switching from the second state to the first state.

### <Proposal 1-2>

In Proposal 1-1, the continuous transmission accompanied by power variation is assumed, and the exemplary definition of the transient period in a case where the power of NCR is switched in a case where the former power period and the latter power period are continuous with each other in the power switching has been described.

In Proposal 1-2, a non-continuous transmission accompanied by power variation is assumed. In other words, it is assumed that the former power period and the latter power period are not continuous with each other in the power switching. Then, the exemplary definition of the transient period in a case where the power is switched from the former power to the latter power in the case based on this assumption is described.

For example, an indication that the former power period and the latter power period are not continuous may be indicated to the NCR.

In Proposal 1-2, illustratively, the former power period and the latter power period being not continuous with each other corresponds to a gap period being provided between the former power period and the latter power period.

Note that the gap period may exist between two transmissions accompanied by power variation. In other words, the gap period may exist between the former power period and the latter power period. The gap period may mean a time width for NCR to switch the power from the former power to the latter power, or may mean a time width for switching transmission from transmission using the former power to transmission using the latter power. Further, the gap period may include a time other than the time for switching the power. The gap period may be a time interval in which the NCR does not perform transfer.

Further, at least a part of the gap period may include a time interval in which the NCR may perform the transfer.

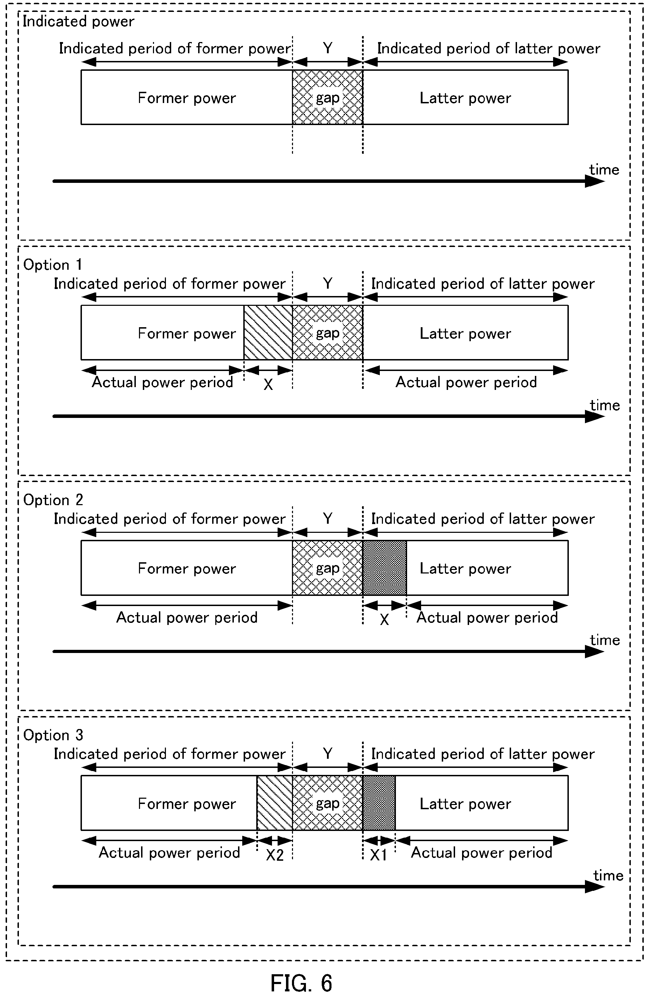

For the transient period in the power switching, three options will be described below with reference to FIG. 6.

FIG. 6 is a diagram illustrating examples of the former power period and the latter power period that are not continuous. In the example of FIG. 6, a gap period is provided between the former power period and the latter power period. Further, in the example of FIG. 6, the transition from the former power period to the latter power period across the gap period, that is, the switching from the former power to the latter power is illustrated. For example, FIG. 6 illustrates the indicated former power period and the indicated latter power period, and cases where Options 1 to 3 are applied to the indicated former power period and the indicated latter power period.

In the indicated power period ("Indicated power" in the drawing), it is shown that by providing a gap period between the indicated former power period and the indicated latter power period, the indicated former power period and the indicated latter power period are not continuous. Three options applied to this pattern will be described below.

### <Option 1 of Proposal 1-2>

In Option 1 of Proposal 1-2, the transient period is defined within the indicated former power period, similarly to Option 1 of Proposal 1-1. For example, as illustrated in the example of Option 1 in FIG. 6, the transient period is the last X time interval of the indicated former power period. In Option 1 of Proposal 1-2, the actual former power period may be a section excluding the last X time interval from the indicated former power period.

Note that, NCR-Fwd may be assumed to use the former power in the actual former power period. Alternatively, NCR-Fwd may be required to use the former power in the actual former power period. Note that the request to NCR-Fwd to use the former power may be based on the actual former power period. That is, the request to NCR-Fwd for the power in the former transmission may be based on the actual former power period. In other words, NCR-Fwd need not be assumed to use the former power or need not be required to use the former power in the transient period. Note that, during the transient period, NCR may be in an ON state (or an active state). In this case, NCR may be assumed or required to use the former power in the transient period.

Here, X, which is a time interval corresponding to the transient period, may be defined in advance, may be configured, or may be the subject of the Capability of NCR.

Note that X may indicate the length of the transient period or the length of the transient period excluding the gap period. Further, in a case where the gap period is longer than the transient period, X may be zero.

In Option 1 of Proposal 1-2, the transient period is defined within the indicated former power period. Thus, NCR and gNB can configure the former power period and the latter power period in consideration of the transient period, and therefore, an appropriate communication operation can be controlled. Further, by defining the transient period within the indicated former power period, the indicated latter power period can be secured as the actual latter power period. Further, defining the transient period within the indicated former power period shortens the length of the former power period, and thus the power consumption of NCR can be suppressed, for example, in a case where the former power is greater than the latter power.

### <Option 2 of Proposal 1-2>

In Option 2 of Proposal 1-2, the transient period is defined within the indicated latter power period, similarly to Option 2 of Proposal 1-1. For example, as illustrated in the example of Option 2 in FIG. 6, the transient period is the first X time interval of the indicated latter power period. In Option 2 of Proposal 1-2, the section excluding the first X time interval from the indicated latter power period may be the actual latter power period.

Note that, NCR-Fwd may be assumed to use the latter power in the actual latter power period. Alternatively, NCR-Fwd may be required to use the latter power in the actual latter power period.

Note that the request to NCR-Fwd to use the latter power may be based on the actual latter power period. That is, the request to NCR-Fwd for the power in the latter transmission may be based on the actual latter power period. In other words, NCR-Fwd need not be assumed to use the latter power or need not be required to use the latter power in the transient period. Note that, during the transient period, NCR may be in an ON state (or an active state). In this case, NCR may be assumed or required to use the latter power in the transient period.

Here, X, which is a time interval corresponding to the transient period, may be defined in advance, may be configured, or may be the subject of the Capability of NCR.

Note that X may indicate the length of the transient period or the length of the transient period excluding the gap period. Further, in a case where the gap period is longer than the transient period, X may be zero.

In Option 2 of Proposal 1-2, the transient period is defined within the indicated latter power period. Thus, NCR and gNB can configure the former power period and the latter power period in consideration of the transient period, and therefore, an appropriate communication operation can be controlled. Further, by defining the transient period within the indicated latter power period, the indicated former power period can be secured as the actual former power period. Further, defining the transient period within the latter power period shortens the length of the latter power period, and thus the power consumption of NCR can be suppressed, for example, in a case where the latter power is greater than the former power.

### <Option 3 of Proposal 1-2>

In Option 3 of Proposal 1-2, a part of the transient period is defined within the indicated former power period, similarly to Option 3 of Proposal 1-1. Then, in Option 3 of Proposal 1-2, a part of the transient period is defined within the indicated latter power period. In other words, the transient period is defined as being divided into a period within the indicated former power period and a period within the indicated latter power period. The partial transient period defined in the indicated former power period and the partial transient period defined in the indicated latter power period need not be temporally continuous.

The transient period in the latter power period is the first X1 time interval of the indicated latter power period. The transient period in the former power period is the last X2 time interval of the indicated former power period. In this case, the actual former power period is a period excluding the transient period from the indicated former power period, and the actual latter power period is a period excluding the transient period from the indicated latter power period. In the example of Option 3 in FIG. 6, the actual former power period is a period excluding the last X2 time interval from the indicated former power period, and the actual latter power period is a period excluding the first X1 time interval from the indicated latter power period.

Note that, NCR-Fwd may be assumed to use the former power in the actual former power period. NCR-Fwd may be assumed to use the latter power in the actual latter power period. Alternatively, NCR-Fwd may be required to use the former power in the actual former power period. Alternatively, NCR-Fwd may be required to use the latter power in the actual latter power period. Note that the request to NCR-Fwd for the transmission power may be based on the actual power period. For example, the request to NCR-Fwd for the power in the former transmission may be based on the actual former power period. Further, the request to NCR-Fwd for the power in the latter transmission may be based on the actual latter power period. In other words, NCR-Fwd need not be assumed to use the former power or the latter power in the transient period. NCR-Fwd need not be required to use the former power or the latter power in the transient period.

Here, X1 and X2, which are time intervals corresponding to the transient period, may be defined in advance, may be configured, or may be the subject of the Capability of NCR. Alternatively, X indicating the sum of X1 and X2 may be defined in advance, may be configured, or may be the subject of the Capability of NCR. In this case, X = X1 + X2 may be applied. Further, in this case, X1 = X2 = 0.5X may be applied, or X1 and X2 may be determined from X according to a specific ratio. Alternatively, X1 and X2 may depend on the implementation of NCR. For example, the ratio between X1 and X2 may be defined by the implementation of NCR, and X1 and X2 may be determined by considering the ratio with respect to a predetermined X.

Note that X may indicate the length of the transient period or the length of the transient period excluding the gap period. Further, in a case where the gap period is longer than the transient period, X may be zero. Alternatively, X may indicate the sum of X1, X2, and the length of the gap period. In this case, X1 and X2 may be determined from a length obtained by subtracting the length of the gap period from X.

In Options 1 to 3 of Proposal 1-2 described above, in a case where the gap between the time of the end of the indicated former power period and the time of the start of the indicated latter power period is a Y time interval, the value for Y may be predefined, may be configured, or may be the subject of the capability of NCR. The value for Y may be, for example, Y itself or the sum of X and Y (for example, Z in Z = X + Y). Alternatively, the value for Y may be the sum of X1, X2, and Y in Option 3 (for example, Z in Z = X1 + X2 + Y).

In Option 3 of Proposal 1-2, the transient period is defined within the indicated former power period and the indicated latter power period. Thus, NCR and gNB can configure the former power period and the latter power period in consideration of the transient period, and thus an appropriate communication operation can be controlled.

As described above, Options 1 to 3 of Proposal 1-2 may be the same as those of Proposal 1-1 except for the presence of a gap period. In Proposal 1-2, any of the following two options may be further applied.

### <Option 4 of Proposal 1-2>

In Option 4 of Proposal 1-2, it may be assumed that there is a limitation on the magnitude relationship between the gap between two transmissions accompanied by power variation and a specific value. For example, the NCR may assume that the gap between two transmissions accompanied by power variation is greater than a specific value or is equal to or greater than a specific value. Here, the gap between the two transmissions accompanied by power variation may be replaced with, for example, the gap between the time of the end of the indicated former transmission and the time of the start of the indicated latter transmission. Further, here, the former transmission and the latter transmission may be replaced with the former power period and the latter power period, respectively. For example, the NCR may assume that the gap between the time of the end of the indicated former transmission and the time of the start of the indicated latter transmission is greater than a specific value or is equal to or greater than a specific value.

Further, here, the time of the end of the indicated former transmission may be, for example, the last symbol of the indicated former transmission or the last slot of the indicated former transmission. Further, the time of the start of the indicated latter transmission may be, for example, the first symbol of the indicated latter transmission or the first slot of the indicated latter transmission. Further, the specific value may be defined in advance or configured. Alternatively, the specific value may be the subject of the Capability of NCR.

The specific value may correspond to the length of the transient period or may be determined based on the transient period. For example, the specific value may be a value obtained by multiplying or dividing the length of the transient period by a specific coefficient, or a value obtained by adding or subtracting the specific value to or from the length of the transient period. Further, for example, the specific value may be a value obtained by performing an operation on the length of the transient period such that the specific value is an integer multiple of a specific time length. For example, the specific value may be a value obtained by multiplying the length of the transient period by a specific coefficient such that the specific value is an integer multiple of a specific time length, and/or by adding a specific addition value to the length of the transient period. Note that the specific time length may be the length in a specific time unit such as a symbol length, a slot length, or a subframe length.

Note that, in Option 4 of Proposal 1-2, the NCR need not assume that the gap between two transmissions accompanied by power variation is less than or equal to or less than a specific value. Further, in Option 4 of Proposal 1-2, the NW indicates that the gap between two transmissions accompanied by power variation is greater than or equal to or greater than a specific value.

In Option 4 of Proposal 1-2, it is assumed that there is a limitation on the magnitude relationship between the gap between two transmissions accompanied by power variation and a specific value. Thus, it is possible to secure the time required for switching the power in the gap equal to or greater than the specific value and to control an appropriate communication operation.

### <Option 5 of Proposal 1-2>

In Option 5 of Proposal 1-2, it need not be assumed that there is a limitation on the magnitude relationship between the gap between two transmissions accompanied by power variation and a specific value. Further, in Option 5 of Proposal 1-2, in a case where the gap between two transmissions accompanied by power variation is less than the specific value or is equal to or less than the specific value, NCR ignores the indication. In a case where the indication is ignored, the NCR may continue to use the former power.

Here, the gap between the two transmissions accompanied by power variation may be replaced with, for example, the gap between the time of the end of the indicated former transmission and the time of the start of the indicated latter transmission. Further, here, the former transmission and the latter transmission may be replaced with the former power period and the latter power period, respectively. For example, the NCR may assume that the gap between the time of the end of the indicated former transmission and the time of the start of the indicated latter transmission is greater than a specific value or is equal to or greater than a specific value.

The time of the end of the indicated former transmission, the time of the start of the indicated latter transmission, and the specific value in Option 5 of Proposal 1-2 may be the same as those in Option 4 of Proposal 1-2.

In Option 5 of Proposal 1-2, NCR ignores the indication in a case where the gap between two transmissions accompanied by power variation is less than a specific value or is equal to or less than a specific value. Thus, in a case where the time required for NCR to switch the power cannot be ensured, an operation of not switching the power can be selected and thus, it is possible to control an appropriate communication operation (transfer operation).

Note that, in each option of Proposal 1-2 described above, the unit of the value (for example, X, X1, X2, Y, and Z) related to the transient period may be at least one of a slot, a symbol, a subframe, a second, a millisecond, and a microsecond.

Note that, in Proposal 1-2, in a case where a sufficient gap period (for example, a gap period longer than the transient period) is provided, the transient period need not be considered. For example, the gap period in Proposal 1-2 may be a period based on the time for NCR to switch power, or may be a period configured by the NW (for example, gNB). Further, the gap period may indicate a period between the former power period and the latter power period configured by the NW (for example, gNB). The transient period may indicate the time required for NCR to switch power. For example, in a case where the gap period is configured by the NW (for example, gNB) as a time longer than the time required for NCR to switch power, the transient period need not be considered.

Note that the option applied in each of the options of Proposal 1-2 described above may be defined in advance or may be configured. Alternatively, the applicability of each option may be the subject of the capability of NCR.

As described above, Proposal 1 defines the transient period in a case where the power of NCR is switched. Thus, it is possible to consider the time required for the NCR to switch the power, and the switching is performed at an appropriate time, thereby enabling the communication operation to be appropriately controlled.

For example, by considering the time required for switching, it is possible to avoid inconsistency in the recognition of the power to be used between the side that has transmitted the switching indication (for example, NW) and the NCR that has received the indication. Thus, for example, it is possible to avoid a situation in which the communication operation between NCR and gNB cannot be appropriately controlled due to the NW assuming that the power of NCR is the latter power even though the power of NCR is not the latter power.

Further, in each option of Proposal 1 described above, the time interval corresponding to the transient period may vary depending on the magnitude of at least one of the former power and the latter power. For example, the time interval corresponding to the transient period may be longer as the former power increases. Alternatively, the time interval corresponding to the transient period may be longer as the latter power increases. Alternatively, the time interval corresponding to the transient period may be longer as the difference in magnitude between the former power and the latter power increases.

Further, each option of Proposal 1 described above may be applied based on the magnitude relationship between the former power and the latter power. For example, Option 1 may be applied in a case where the former power is greater than the latter power, and Option 2 may be applied in a case where the former power is less than the latter power.

Further, in each option of Proposal 1 described above, the time interval corresponding to the transient period may be based on the magnitude relationship between the former power and the latter power. For example, the time interval corresponding to the transient period in a case where the former power is greater than the latter power may be different from the time interval corresponding to the transient period in a case where the former power is less than the latter power. Here, in a case where the magnitude (for example, absolute value) of the difference between the former power and the latter power is the same, the time interval corresponding to the transient period in a case where the former power is greater than the latter power may be the same as or different from the time interval corresponding to the transient period in a case where the former power is less than the latter power.

Note that the method for indicating power in the present embodiment is not particularly limited. For example, the maximum output power (MOP) may be indicated to the NCR. Further, the amount of an increase (or decrease) in power may be indicated to the NCR. For example, the power may be indicated using a Transmit Power Control (TPC) command. Further, the NCR may be indicated with relative power with respect to the current power. For example, a value (for example, a value in dB) indicating the power to be relatively increased (or decreased) may be indicated. Alternatively, power may be indicated using a power headroom. Further, absolute power may be indicated to the NCR. Further, the indication of power may depend on the implementation of the NCR.

### <Proposal 2>

In RAM1#109 of 3GPP, it was agreed to control the beam for the access link of NCR. For example, it was agreed that beam information is beneficial and recommended as side control information for NCR in order to control the behavior of NCR in at least the access link. For example, the beam for the access link of NCR may be controlled in FR2, or the beam may be controlled for the access link of NCR in both FR2 and FR1. Further, the beam may be controlled for a link other than the access link.

Further, in the agreement of 3GPP RAM1#109, the beam of the access link may be indicated by the following options.
Option a: Index of beam
Option b: Index of source Reference Signal (RS) (for example, an indicator such as Transmission Configuration Indication (TCI))

Note that, in Option a, there is room for consideration regarding the method for indicating the resource of the corresponding beam in the time domain. Further, in Option b, there is room for consideration regarding the definition of the source RS, the method for indicating the resource of the corresponding beam in the time domain, and the association between the source RS and the beam.

Note that, here, the above options do not intend that the NCR is capable of generating a reference signal and transmitting the reference signal to a UE, or that the NCR is capable of receiving a reference signal from a UE and processing the reference signal. Further, the above options do not intend that the NCR is not capable of generating a reference signal and transmitting the reference signal to a UE, or that the NCR is not capable of receiving a reference signal from a UE and processing the reference signal. In other words, the above options need not be related to whether a reference signal can be transmitted and received between the NCR and a UE.

Further, there is room for consideration as to whether to select one of the two options described above, to combine the two options, or to select both.

Further, regarding the beam of NCR-Fwd for the backhaul link, it was agreed that the same TCI state as NCR-MT for the C-link is assumed for the beam of NCR-Fwd for the backhaul link.

For example, in a case where the carrier of NCR-MT is in a set of carriers transferred by NCR-Fwd, the same TCI state as NCR-MT for the C-link is assumed for the beam in NCR-Fwd for the backhaul link.

Note that, the same beam correspondence assumption as the DL and/or UL of the C-link of NCR-MT may be applied to the DL and/or UL of the backhaul link of NCR-Fwd. For example, the DL beam of the backhaul link of NCR-Fwd and the DL and/or UL beam of the C-link of NCR-MT may have a correspondence relationship. For example, the UL beam of the backhaul link of NCR-Fwd and the DL and/or UL beam of the C-link of NCR-MT may have a correspondence relationship.

Note that, there is room for consideration regarding an indication from gNB for determining the beam at NCR-Fwd for the backhaul link. Alternatively, there is room for consideration of the implicit determination of the beam at NCR-Fwd for the backhaul link.

Here, in a normal UE, the beam switching time may be considered.

For example, in a case of an aperiodic Tracking Reference Signal (TRS), a UE does not assume that the offset between the triggering DCI and the TRS is less than the value reported by the UE as a UE capability.

Further, for example, in a case of an aperiodic Channel State Information-Reference Signal (CSI-RS), in a case where the offset between the triggering DCI and the CSI-RS is less than the value reported by the UE as a UE capability, a default beam is used for the CSI-RS.

Further, for example, in a case of PDSCH, the TCI state indicated by DCI scheduling the PDSCH (which may be referred to as PDSCH scheduling DCI) is applied only when the offset between the scheduling DCI and the PDSCH is equal to or greater than a value reported by the UE as a UE capability. In other words, in the case of PDSCH, the TCI state indicated by DCI scheduling the PDSCH (which may be referred to as PDSCH scheduling DCI) is applied when the offset between the scheduling DCI and the PDSCH is equal to or greater than a value reported as a UE capability, and is not applied when the offset between the scheduling DCI and the PDSCH is not equal to or greater than the value reported as a UE capability.

Further, for example, in the case of PDSCH, when the offset between the scheduling DCI and the PDSCH is less than the value reported by the UE as a UE capability, a default beam may be used for the PDSCH.

As illustrated above, the beam switching time is considered in a normal UE. For example, in the above example, a certain offset and a beam to be used have a specific relationship in the cases of the non-periodic TRS, aperiodic CSI-RS, and PDSCH. In the same manner as the normal UE, the beam switching time needs to be considered also in NCR.

Hereinafter, a proposal regarding the beam switching time will be described. The proposal described below may be applied to at least one of a transmission beam of DL for an access link, a reception beam of UL for an access link, a reception beam of DL for a backhaul link, and a transmission beam of UL for a backhaul link, or may be applied to a combination of two or more of these.

Note that, in the following, the beam switching at NCR-Fwd will be described by way of example, but the beam at NCR-Fwd in the following description may be replaced with at least one of a transmission beam of DL for an access link, a reception beam of UL for an access link, a reception beam of DL for a backhaul link, and a transmission beam of UL for a backhaul link, and may be applied to a combination of two or more of these.

Further, the proposal described below may be applied to at least one of a reception beam of DL for a C-link and a transmission beam of UL for a C-link. Further, the beam in the following description may be replaced with a beam used by NCR-Fwd and/or a beam used by NCR.

Further, the beam may correspond to a spatial relation, a spatial domain filter, TCI, and Quasi-Colocation (QCL), and may be replaced with one another.

With respect to the beam switching time described above, the same cases as the power switching described in Proposal 1 should be considered. For example, with respect to beam control at NCR, the time for switching between two beams should be considered. The two beams may be two beams that are different from each other. The two beams that are different from each other may be, for example, two beams having directivity in different directions from each other, or may be two beams corresponding to different beam indices from each other.

Accordingly, in Proposal 2, the time when the beam of NCR switches from one beam to another beam is defined. Note that, in Proposal 2, the time when the beam of NCR switches from one beam to another beam may be referred to as a transient period. Further, the term "transient period" may be replaced with another expression such as a transient state period, a transient period, or a state transient period. For example, Proposal 2 includes a proposal in which the "power" in the power switching in Proposal 1 is replaced with a "beam."

Note that the time required for NCR to perform switching between two beams (for example, the transient period) may be shorter than a cyclic prefix (CP) or shorter than a symbol. For example, in a case where the transient period is shorter than a CP or a symbol, Proposal 2 may be a proposal for a consideration in RAN4 only rather than a consideration in RAN1 of 3GPP. On the other hand, the transient period may be equal to or longer than a CP, or may be equal to or longer than a symbol. For example, in a case where the transient period is equal to or longer than a CP or equal to or longer than a symbol, Proposal 2 may be a proposal for a consideration in RAN1 and/or a consideration in RAN4 of 3GPP.

Note that, in the following description, in the beam switching, the beam before switching is sometimes referred to as a beam of the former or a former beam. Further, in the beam switching, the beam after switching is sometimes referred to as a beam of the latter or a latter beam.

Note that the beam in the following description may be a narrow beam, which has a relatively narrow beam width, or a wide beam, which has a relatively wide beam width. For example, in the following description, the beam switching may include at least one of switching from a narrow beam to a wide beam, switching from a wide beam to a narrow beam, switching from a certain narrow beam #i to another narrow beam #j, and switching from a certain wide beam #i to another wide beam #j.

Further, in the following description, the beam switching may include at least one of switching from a state in which a beam is not used to a state in which a beam is used, and switching from a state in which a beam is used to a state in which a beam is not used. The state in which a beam is not used may include, for example, a state in which nondirectional communication is performed, a state in which communication is not performed, and the like.

Further, the transmission using the beam before switching is sometimes referred to as transmission before switching, transmission of the former, or former transmission. Further, the transmission using the beam after switching is sometimes referred to as transmission after switching, transmission of the latter, or latter transmission.

Further, the period in which the beam before switching is used is sometimes referred to as a beam period before switching, a beam period of the former, or a former beam period. Further, the period in which the beam after switching is used is sometimes referred to as a beam period after switching, a beam period of the latter, or a latter beam period. Here, the use of the beam may correspond to transmitting a signal using the beam, receiving a signal using the beam, and the like.

### <Proposal 2-1>

In Proposal 2-1, continuous transmission accompanied by beam variation is assumed. The expression "beam variation" may be replaced with an expression such as change of beam, transition of beam, or switching of beam. In other words, it is assumed that the former beam period and the latter beam period are continuous with each other in the beam switching. Then, an exemplary definition of a transient period in a case where the beam is switched from the former beam to the latter beam in the case based on this assumption will be described.

For example, an indication that the former beam period and the latter beam period are continuous may be indicated to NCR.

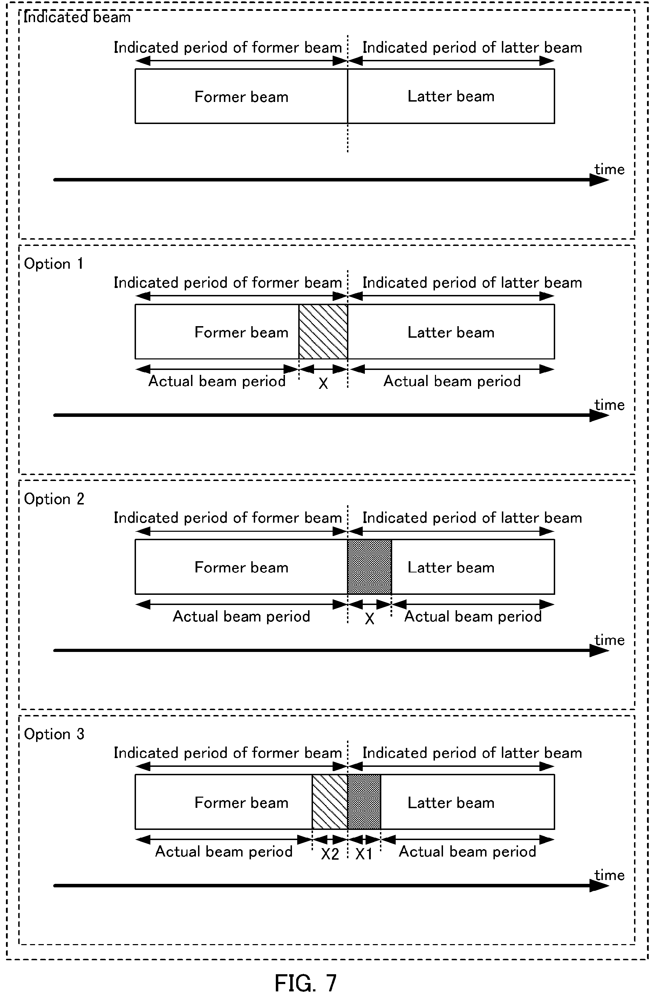

For the transient period in the beam switching, three options will be described below with reference to FIG. 7. For the transient period in a case where the former beam period and the latter beam period are continuous, any of the three options may be adopted.

FIG. 7 is a diagram illustrating examples of a former beam period and a latter beam period that are continuous. In the example of FIG. 7, the former beam period and the latter beam period in a case where the beam period transitions from the former beam period to the latter beam period, that is, in a case where the beam is switched from the former beam to the latter beam, are illustrated. For example, FIG. 7 illustrates the indicated former beam period and the indicated latter beam period, and cases where Options 1 to 3 are applied to the indicated former beam period and the indicated latter beam period.

In the indicated beam period ("Indicated beam" in the drawing), it is shown that the indicated former beam period and the indicated latter beam period are continuous with each other. Here, the indicated former beam period (or the indicated latter beam period) may be indicated explicitly or implicitly. For example, the NCR may receive an indication of the former beam and an indication of the former beam period, and may use the former beam in the period based on the indication. Alternatively, NCR may start the former beam period upon receiving the indication of the former beam and continue the former beam period until receiving the indication of the latter beam. Note that three options applied to this pattern will be described below.

### <Option 1 of Proposal 2-1>

In Option 1 of Proposal 2-1, the transient period is defined within the indicated former beam period. For example, as illustrated in the example of Option 1 in FIG. 7, the transient period is the last X time interval of the indicated former beam period. In Option 1 of Proposal 2-1, the actual former beam period may be a section excluding the last X time interval from the indicated former beam period.

Note that, NCR-Fwd may be assumed to use the former beam in the actual former beam period. Alternatively, NCR-Fwd may be required to use the former beam in the actual former beam period. Note that the request to NCR-Fwd to use the former beam may be based on the actual former beam period. That is, the request to NCR-Fwd for the beam in the former transmission may be based on the actual former beam period. In other words, NCR-Fwd need not be assumed to use the former beam and need not be required to use the former beam in the transient period. Note that, during the transient period, NCR may be in an ON state (or an active state). In this case, NCR may be assumed or required to use the former beam in the transient period.

Here, X, which is a time interval corresponding to the transient period, may be defined in advance, may be configured, or may be the subject of the Capability of NCR.

In Option 1 of Proposal 2-1, the transient period is defined within the indicated former beam period. Thus, NCR and gNB can configure the former beam period and the latter beam period in consideration of the transient period, and therefore, an appropriate communication operation can be controlled. Further, by defining the transient period within the indicated former beam period, the indicated latter beam period can be secured as the actual latter beam period.

### <Option 2 of Proposal 2-1>

In Option 2 of Proposal 2-1, the transient period is defined within the indicated latter beam period. For example, as illustrated in the example of Option 2 in FIG. 7, the transient period is the first X time interval of the indicated latter beam period. In Option 2 of Proposal 2-1, the section excluding the first X time interval from the indicated latter beam period may be the actual latter beam period.

Note that, NCR-Fwd may be assumed to use the latter beam in the actual latter beam period. Alternatively, NCR-Fwd may be required to use the latter beam in the actual latter beam period. Note that the request to NCR-Fwd to use the latter beam may be based on the actual latter beam period. That is, the request to NCR-Fwd for the beam in the latter transmission may be based on the actual latter beam period. In other words, NCR-Fwd need not be assumed to use the latter beam in the transient period, or need not be required to use the latter beam. Note that, during the transient period, NCR may be in an ON state (or an active state). In this case, NCR may be assumed or required to use the latter beam in the transient period.

Here, X, which is a time interval corresponding to the transient period, may be defined in advance, may be configured, or may be the subject of the Capability of NCR.

In Option 2 of Proposal 2-1, the transient period is defined within the indicated latter beam period. Thus, NCR and gNB can configure the former beam period and the latter beam period in consideration of the transient period, and therefore, an appropriate communication operation can be controlled. Further, by defining the transient period within the indicated latter beam period, the indicated former beam period can be secured as the actual former beam period.

### <Option 3 of Proposal 2-1>

In Option 3 of Proposal 2-1, a part of the transient period is defined within the indicated former beam period. In Option 3 of Proposal 2-1, a part of the transient period is defined within the indicated latter beam period. In other words, the transient period is defined as being divided into a period within the indicated former beam period and a period within the indicated latter beam period. The partial transient period defined in the indicated former beam period and the partial transient period defined in the indicated latter beam period may be temporally continuous.

The transient period in the latter beam period is the first X1 time interval of the indicated latter beam period. The transient period in the former beam period is the last X2 time interval in the indicated former beam period. In this case, the actual former beam period is a period excluding the transient period from the indicated former beam period, and the actual latter beam period is a period excluding the transient period from the indicated latter beam period. In the example of Option 3 in FIG. 7, the actual former beam period is a period excluding the last X2 time interval from the indicated former beam period, and the actual latter beam period is a period excluding the first X1 time interval from the indicated latter beam period.

Note that, NCR-Fwd may be assumed to use the former beam in the actual former beam period. NCR-Fwd may be assumed to use the latter beam in the actual latter beam period. Alternatively, NCR-Fwd may be required to use the former beam in the actual former beam period. Alternatively, NCR-Fwd may be required to use the latter beam in the actual latter beam period. Note that the request to NCR-Fwd for the transmission beam may be based on the actual beam period. For example, the request to NCR-Fwd for the beam in the former transmission may be based on the actual former beam period. Further, the request to NCR-Fwd for the beam in the latter transmission may be based on the actual latter beam period. In other words, NCR-Fwd need not be assumed to use the former beam or the latter beam in the transient period. NCR-Fwd need not be required to use the former beam or the latter in the transient period.

Here, X1 and X2, which are time intervals corresponding to the transient period, may be defined in advance, may be configured, or may be the subject of the Capability of NCR. Alternatively, X indicating the sum of X1 and X2 may be defined in advance, may be configured, or may be the subject of the Capability of NCR. In this case, X = X1 + X2 may be applied. Further, in this case, X1 = X2 = 0.5X may be applied, or X1 and X2 may be determined from X according to a specific ratio. Alternatively, X1 and X2 may depend on the implementation of NCR. For example, the ratio between X1 and X2 may be defined by the implementation of NCR, and X1 and X2 may be determined by considering the ratio with respect to a predetermined X.

In Option 3 of Proposal 2-1, the transient period is defined within the indicated former beam period and the indicated latter beam period. Thus, NCR and gNB can configure the former beam period and the latter beam period in consideration of the transient period, and thus, an appropriate transfer operation can be controlled.

Note that, in each option of Proposal 1-1 described above, the unit of the value (for example, X, X1, and X2) related to the transient period may be at least one of a slot, a symbol, a subframe, a second, a millisecond, and a microsecond.

Note that the option applied in each option of Proposal 2-1 described above may be defined in advance or may be configured. Alternatively, the applicability of each option may be the subject of the capability of NCR.

As described above, Proposal 2-1 defines the transient period in a case where the beam of NCR is switched. Thus, it is possible to consider the time required for the beam of NCR to be switched, and the switching is performed at an appropriate time, thereby enabling the operation to be controlled appropriately.

For example, by considering the time required for switching, it is possible to avoid inconsistency in beam recognition between the side that has transmitted the switching indication (for example, NW) and the NCR that has received the indication. Thus, for example, it is possible to avoid a situation in which the NW assumes that the beam of the NCR is the former beam even though the beam of the NCR is not the former beam, and the communication operation between the NCR and the gNB cannot be appropriately controlled.

For example, in Proposal 2-1, the NCR configures a specific period before a first period (for example, the latter beam period) in which a first beam (for example, the latter beam) is used in a case where the beam is switched to the first beam, and switches the beam to the first beam. Further, for example, in Proposal 2-1, the NCR configures, in a case where the NCR switches the state from a second state (for example, a state in which the latter beam is used) different from the first state (for example, a state in which the former beam is used) to the first state, a specific period (for example, a transient period) between the period of the second state (for example, the latter beam period) and the period of the first state (the former beam period). Note that the specific period may be defined based on the time required for switching from the second state to the first state.

### <Proposal 2-2>

Proposal 2-1 has shown exemplary beam switching on the assumption of a continuous transmission accompanied by beam variation, and an exemplary definition of a transient period when the beam of NCR is switched in a case where the former beam period and the latter beam period are continuous with each other.

In Proposal 2-2, a non-continuous transmission accompanied by beam variation is assumed. In other words, it is assumed that the former beam period and the latter beam period are not continuous with each other in the beam switching. Then, the exemplary definition of the transient period in a case where the beam is switched from the former beam to the latter beam in the case based on this assumption is described.

For example, an indication that the former beam period and the latter beam period are not continuous may be indicated to the NCR.

Note that, in Proposal 2-2, illustratively, the former beam period and the latter beam period being not continuous with each other corresponds to a gap period being provided between the former beam period and the latter beam period.

Note that the gap period may exist between two transmissions accompanied by beam variation. In other words, the gap period may exist between the former beam period and the latter beam period. The gap period may mean a time width for NCR to switch the beam from the former beam to the latter beam, or may mean a time width for switching transmission from transmission (or reception) using the former beam to transmission (or reception) using the latter beam. Further, the gap period may include a time other than the time for switching the beam. The gap period may be a time interval in which the NCR does not perform transfer.

Further, at least a part of the gap period may include a time interval in which the NCR may perform the transfer.

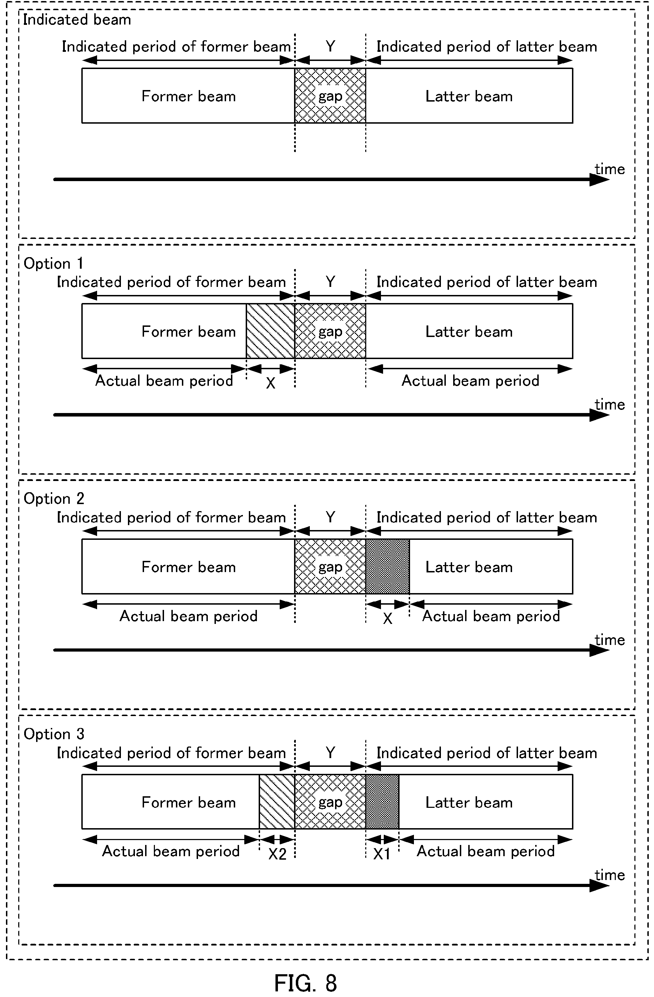

For the transient period in the beam switching, three options will be described below with reference to FIG. 8.

FIG. 8 is a diagram illustrating examples of the former beam period and the latter beam period that are not continuous. In the example of FIG. 8, a gap period is provided between the former beam period and the latter beam period. Further, in the example of FIG. 8, the transition from the former beam period to the latter beam period across the gap period, that is, the switching from the former beam to the latter beam is illustrated. For example, FIG. 8 illustrates the indicated former beam period and the indicated latter beam period, and cases where Options 1 to 3 are applied to the indicated former beam period and the indicated latter beam period.

In the indicated beam period ("Indicated beam" in the drawing), it is shown that by providing a gap period between the indicated former beam period and the indicated latter beam period, the indicated former beam period and the indicated latter beam period are not continuous. Three options applied to this pattern will be described below.

### <Option 1 of Proposal 2-2>

In Option 1 of Proposal 2-2, the transient period is defined within the indicated former beam period, similarly to Option 1 of Proposal 2-1. For example, as illustrated in the example of Option 1 in FIG. 8, the transient period is the last X time interval of the indicated former beam period. In Option 1 of Proposal 2-2, the actual former beam period may be a section excluding the last X time interval from the indicated former beam period.

Note that, NCR-Fwd may be assumed to use the former beam in the actual former beam period. Alternatively, NCR-Fwd may be required to use the former beam in the actual former beam period. Note that the request to NCR-Fwd for using the former beam may be based on the actual former beam period. That is, the request to NCR-Fwd for the beam in the former transmission may be based on the actual former beam period. In other words, NCR-Fwd need not be assumed to use the former beam or need not be required to use the former beam in the transient period. Note that, during the transient period, NCR may be in an ON state (or an active state). In this case, NCR may be assumed or required to use the former beam in the transient period.

Here, X, which is a time interval corresponding to the transient period, may be defined in advance, may be configured, or may be the subject of the Capability of NCR.

Note that X may indicate the length of the transient period or the length of the transient period excluding the gap period. Further, in a case where the gap period is longer than the transient period, X may be zero.

In Option 1 of Proposal 2-2, the transient period is defined within the indicated former beam period. Thus, NCR and gNB can configure the former beam period and the latter beam period in consideration of the transient period, and therefore, an appropriate communication operation can be controlled. Further, by defining the transient period within the indicated former beam period, the indicated latter beam period can be secured as the actual latter beam period.

### <Option 2 of Proposal 2-2>

In Option 2 of Proposal 2-2, the transient period is defined within the indicated latter beam period, similarly to Option 2 of Proposal 2-1. For example, as illustrated in the example of Option 2 in FIG. 8, the transient period is the first X time interval of the indicated latter beam period. In Option 2 of Proposal 2-2, the section excluding the first X time interval from the indicated latter beam period may be the actual latter beam period.

Note that, NCR-Fwd may be assumed to use the latter beam in the actual latter beam period. Alternatively, NCR-Fwd may be required to use the latter beam in the actual latter beam period.

Note that the request to NCR-Fwd for using the latter beam may be based on the actual latter beam period. That is, the request to NCR-Fwd for the beam in the latter transmission may be based on the actual latter beam period. In other words, NCR-Fwd need not be assumed to use the latter beam in the transient period, and need not be required to use the latter beam. Note that, during the transient period, NCR may be in an ON state (or an active state). In this case, NCR may be assumed or required to use the latter beam in the transient period.

Here, X, which is a time interval corresponding to the transient period, may be defined in advance, may be configured, or may be the subject of the Capability of NCR.

Note that X may indicate the length of the transient period or the length of the transient period excluding the gap period. Further, in a case where the gap period is longer than the transient period, X may be zero.

In Option 2 of Proposal 2-2, the transient period is defined within the indicated latter beam period. Thus, NCR and gNB can configure the former beam period and the latter beam period in consideration of the transient period, and thus, an appropriate transfer operation can be controlled. Further, by defining the transient period within the indicated latter beam period, the indicated former beam period can be secured as the actual former beam period.

### <Option 3 of Proposal 2-2>

In Option 3 of Proposal 2-2, a part of the transient period is defined within the indicated former beam period, similarly to Option 3 of Proposal 2-1. Then, in Option 3 of Proposal 2-2, a part of the transient period is defined within the indicated latter beam period. In other words, the transient period is defined as being divided into a period within the indicated former beam period and a period within the indicated latter beam period. The partial transient period defined in the indicated former beam period and the partial transient period defined in the indicated latter beam period need not be temporally continuous.

The transient period in the latter beam period is the first X1 time interval of the indicated latter beam period. The transient period in the former beam period is the last X2 time interval in the indicated former beam period. In this case, the actual former beam period is a period excluding the transient period from the indicated former beam period, and the actual latter beam period is a period excluding the transient period from the indicated latter beam period. In the example of Option 3 in FIG. 8, the actual former beam period is a period excluding the last X2 time interval from the indicated former beam period, and the actual latter beam period is a period excluding the first X1 time interval from the indicated latter beam period.

Note that, NCR-Fwd may be assumed to use the former beam in the actual former beam period. NCR-Fwd may be assumed to use the latter beam in the actual latter beam period. Alternatively, NCR-Fwd may be required to use the former beam in the actual former beam period. Alternatively, NCR-Fwd may be required to use the latter beam in the actual latter beam period. Note that the request to NCR-Fwd for the beam in the transmission may be based on the actual beam period. For example, the request to NCR-Fwd for the beam in the former transmission may be based on the actual former beam period. Further, the request to NCR-Fwd for the beam in the latter transmission may be based on the actual latter beam period. In other words, NCR-Fwd need not be assumed to use the former beam or the latter beam in the transient period. NCR-Fwd need not be required to use the former beam or the latter beam in the transient period.

Here, X1 and X2, which are time intervals corresponding to the transient period, may be defined in advance, may be configured, or may be the subject of the Capability of NCR. Alternatively, X indicating the sum of X1 and X2 may be defined in advance, may be configured, or may be the subject of the Capability of NCR. In this case, X = X1 + X2 may be applied. Further, in this case, X1 = X2 = 0.5X may be applied, or X1 and X2 may be determined from X according to a specific ratio. Alternatively, X1 and X2 may depend on the implementation of NCR. For example, the ratio between X1 and X2 may be defined by the implementation of NCR, and X1 and X2 may be determined by considering the ratio with respect to a predetermined X.

Note that X may indicate the length of the transient period or the length of the transient period excluding the gap period. Further, in a case where the gap period is longer than the transient period, X may be zero. Alternatively, X may indicate the sum of X1, X2, and the length of the gap period. In this case, X1 and X2 may be determined from a length obtained by subtracting the length of the gap period from X.

Note that, in Options 1 to 3 of Proposal 2-2 described above, when the gap between the time of the end of the indicated former beam period and the time of the start of the indicated latter beam period is a Y time interval, the value for Y may be predefined, may be configured, or may be the subject of the capability of NCR. The value for Y may be, for example, Y itself or the sum of X and Y (for example, Z in Z = X + Y). Alternatively, the value for Y may be the sum of X1, X2, and Y in Option 3 (for example, Z in Z = X1 + X2 + Y).

In Option 3 of Proposal 2-2, the transient period is defined within the indicated former beam period and the indicated latter beam period. Thus, NCR and gNB can configure the former beam period and the latter beam period in consideration of the transient period, and thus, an appropriate transfer operation can be controlled.

As described above, Options 1 to 3 of Proposal 2-2 may be the same as those of Proposal 2-1 except for the presence of a gap period. In Proposal 2-2, further, any of the following two options may be applied.

### <Option 4 of Proposal 2-2>

In Option 4 of Proposal 2-2, it may be assumed that there is a limitation on the magnitude relationship between the gap between two transmissions accompanied by beam variation and a specific value. For example, the NCR may assume that the gap between two transmissions accompanied by beam variation is greater than a specific value or equal to or greater than a specific value. Here, the gap between the two transmissions accompanied by beam variation may be replaced with, for example, the gap between the time of the end of the indicated former transmission and the time of the start of the indicated latter transmission. Further, here, the former transmission and the latter transmission may be replaced with the former beam period and the latter beam period, respectively. For example, the NCR may assume that the gap between the time of the end of the indicated former transmission and the time of the start of the indicated latter transmission is greater than a specific value or is equal to or greater than a specific value.

Further, here, the time of the end of the indicated former transmission may be, for example, the last symbol of the indicated former transmission or the last slot of the indicated former transmission. Further, the time of the start of the indicated latter transmission may be, for example, the first symbol of the indicated latter transmission or the first slot of the indicated latter transmission. Further, the specific value may be defined in advance or configured. Alternatively, the specific value may be the subject of the Capability of NCR.

The specific value may correspond to the length of the transient period or may be determined based on the transient period. For example, the specific value may be a value obtained by multiplying or dividing the length of the transient period by a specific coefficient, or a value obtained by adding or subtracting the specific value to or from the length of the transient period. Further, for example, the specific value may be a value obtained by performing an operation on the length of the transient period such that the specific value is an integer multiple of a specific time length. For example, the specific value may be a value obtained by multiplying the length of the transient period by a specific coefficient such that the specific value is an integer multiple of a specific time length, and/or by adding a specific addition value to the length of the transient period. Note that the specific time length may be the length of a specific time unit such as a symbol length, a slot length, or a subframe length.

Note that, in Option 4 of Proposal 2-2, the NCR need not assume that the gap between two transmissions accompanied by beam variation is less than or equal to or less than a specific value. Further, in Option 4 of Proposal 2-2, the NW indicates that the gap between two transmissions accompanied by beam variation is greater than or equal to or greater than a specific value.

In Option 4 of Proposal 2-2, it is assumed that there is a limitation on the magnitude relationship between the gap between two transmissions accompanied by beam variation and a specific value. Thus, it is possible to secure the time required for switching the beam in the gap equal to or greater than the specific value and to control an appropriate transfer operation.

### <Option 5 of Proposal 2-2>

In Option 5 of Proposal 2-2, it need not be assumed that there is a limitation on the magnitude relationship between the gap between two transmissions accompanied by beam variation and a specific value. Further, in Option 5 of Proposal 2-2, in a case where the gap between two transmissions accompanied by beam variation is less than the specific value or is equal to or less than the specific value, NCR ignores the indication. In a case where the indication is ignored, the NCR may continue to use the former beam.

Here, the gap between the two transmissions accompanied by beam variation may be replaced with, for example, the gap between the time of the end of the indicated former transmission and the time of the start of the indicated latter transmission. Further, here, the former transmission and the latter transmission may be replaced with the former beam period and the latter beam period, respectively. For example, the NCR may assume that the gap between the time of the end of the indicated former transmission and the time of the start of the indicated latter transmission is greater than a specific value or is equal to or greater than a specific value.

The time of the end of the indicated former transmission, the time of the start of the indicated latter transmission, and the specific value in Option 5 of Proposal 2-2 may be the same as those in Option 4 of Proposal 2-2.

In Option 5 of Proposal 2-2, NCR ignores the indication in a case where the gap between two transmissions accompanied by beam variation is less than a specific value or is equal to or less than a specific value. Thus, in a case where the time required for NCR to switch the beam cannot be ensured, an operation of not switching the beam can be selected, and thus, an appropriate relay operation (transfer operation) can be controlled.

Note that, in each option of Proposal 2-2 described above, the unit of the value (for example, X, X1, X2, Y, and Z) related to the transient period may be at least one of a slot, a symbol, a subframe, a second, a millisecond, and a microsecond.

Note that, in Proposal 2-2, in a case where a sufficient gap period (for example, a gap period longer than the transient period) is provided, the transient period need not be considered. For example, the gap period in Proposal 2-2 may be a period based on the time required for NCR to switch the beam, or may be a period configured by the NW (for example, gNB). Further, the gap period may indicate a period between the former beam period and the latter beam period configured by the NW (for example, gNB). The transient period may indicate the time required for NCR to switch the beam. For example, in a case where the gap period is configured by the NW (for example, gNB) as a time longer than the time required for NCR to switch the beam, the transient period need not be considered.

Note that the option applied in each option of Proposal 2-2 described above may be defined in advance or configured. Alternatively, the applicability of each option may be the subject of the NCR capability.

As described above, in Proposal 2, the transient period in a case where the beam of NCR is switched is defined. Thus, it is possible to consider the time required for the NCR to switch the beam, and the switching is performed at an appropriate time, thereby enabling the transfer operation to be controlled appropriately.

For example, by considering the time required for switching, it is possible to avoid inconsistency in the recognition of the beam to be used between the side that has transmitted the switching indication (for example, NW) and the NCR that has received the indication. Thus, for example, it is possible to avoid a situation in which the transfer operation between NCR and gNB cannot be appropriately controlled due to the NW assuming that the beam of NCR is the latter beam even though the beam of NCR is not the latter beam.

Further, in each option of Proposal 2 described above, the time interval corresponding to the transient period may vary depending on at least one of the former beam and the latter beam. For example, the time interval corresponding to the transient period may be defined according to the index of the former beam. Alternatively, the time interval corresponding to the transient period may be defined according to the index of the latter beam. For example, the time interval corresponding to the transient period in a case where the index of a certain former (or latter) beam is a specific index is longer (or shorter) than an index other than the specific index. Alternatively, the time interval corresponding to the transient period may be defined according to the index of the former beam and the index of the latter beam.

Further, each option of Proposal 2 described above may be applied based on a combination of the former beam and the latter beam. For example, Option 1 may be applied in a case where the combination of the index of the former beam and the index of the latter beam is a specific combination of indices, and Option 2 may be applied in a case where the combination of the index of the former beam and the index of the latter beam is a combination different from the specific combination of indices.

Further, Proposal 2 described above may be applied to at least one of switching from a narrow beam to a narrow beam, switching from a wide beam to a wide beam, switching from a narrow beam to a wide beam, and switching from a wide beam to a narrow beam. Further, the options of Proposal 2-1 may be applied independently of each other to these switching. For example, different options may be applied to the switching from a narrow beam to a narrow beam and the switching from a wide beam to a wide beam.

### <Proposal 3>

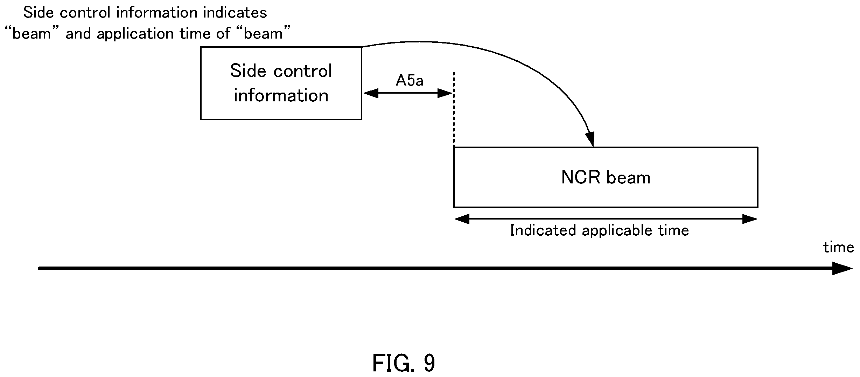

FIG. 9 is a diagram illustrating an example of a relationship between side control information and a certain beam time. FIG. 9 illustrates the time (timing) at which side control information indicating a certain beam to NCR and explicitly indicating the application time of the beam is received, and the time ("NCR beam" in FIG. 9) in which the NCR uses the beam in response to the indication. The side control information may be received via a C-link, for example.

Here, considering that the NCR requires a specific time to switch the beam, a gap between the time when the NCR receives the side control information and the application time of the beam of NCR-Fwd needs to be considered. For example, the gap indicated by arrow A5a in FIG. 9 needs to be considered. Further, considering that a specific time is required for NCR to start using a beam in a state in which the NCR does not use the beam, a gap between the time when the NCR receives the side control information and the application time of the beam of NCR-Fwd also needs to be considered. The application time of the beam may correspond to, for example, the beam period described above.

In a case where this gap is not considered, inconsistency in the recognition of the beam that is being used possibly occurs between the side that has transmitted the indication of the beam (for example, NW) and the NCR that has received the indication. Due to this inconsistency, for example, the NW assumes that the beam of NCR is the indicated beam even though the beam of NCR is not the indicated beam, and thus, the communication operation (for example, transfer operation) between NCR and gNB is possibly not appropriately controlled.

Accordingly, in Proposal 3, the timing for using the indicated beam is defined when the NCR receives an indication related to the operation (for example, an indication for a beam). For example, in a case where the NCR receives an indication related to an operation, the NCR defines the timing at which the operation based on the indication is performed. In Proposal 3, illustratively, the gap between the time when the NCR receives an indication related to an operation and the time when the NCR performs the operation based on the indication is defined.

With this configuration, gNB and NCR can reduce the inconsistency in beam recognition between the gNB and the NCR, and can appropriately control the communication operation (for example, transfer operation) between the NCR and the gNB.

For example, the gNB indicates the timing for using the beam of NCR-Fwd to NCR using the side control information, so that the gNB can grasp the timing at which the NCR has started using the beam of NCR-Fwd. Further, the operation of NCR for the indication related to the timing is defined, and thus the gNB can grasp the timing at which the NCR starts using the beam, thereby allowing the gNB to appropriately perform the communication operation.

Here, in Proposal 3, it is assumed that the side control information indicates a beam used by NCR (for example, NCR-Fwd) and clearly indicates the application time of the beam. Note that, the side control information indicating a beam used by NCR corresponds to the side control information including information indicating the indication related to the beam of NCR (for example, an index of the beam or the like). Further, the side control information clearly indicating the application time of the beam corresponds to the side control information including information indicating the indication related to the application time of the beam. The information indicating the indication related to the application time of the beam may be, for example, at least one of information indicating the start timing of the application time of the beam, information indicating the end timing of the application time of the beam, and information indicating the length of the application time of the beam. The side control information may be included in, for example, at least one of DCI, MAC CE, and RRC.

Further, the operation in a case where the NCR receives side control information including the indication of a beam and the indication of the application time of the beam is defined.

Here, a gap between the time of the side control information and the start time of the application time indicated by the side control information is assumed to be X. Note that the time of the side control information may be represented by the time at which the NCR receives the side control information. The time unit of X may be one of a slot, a symbol, a subframe, a second, a millisecond (ms), and a microsecond (µs).

Note that, in the following description, "time of the side control information" may indicate a specific time (or a specific timing) in the time interval of the side control information. For example, the time of the side control information may be the first symbol, the last symbol, or a specific symbol other than the first and last symbols among the symbols of the side control information. Note that the side control information may be received in one symbol. Further, for example, the time of the side control information may be the first slot, the last slot, or a specific slot other than the first and last slots among the slots of the side control information. Note that the side control information may be received in one slot. **In** this case, the time of the side control information may be the one slot in which the side control information is received. The method of indicating the time of the side control information is not limited to the examples described above.

Further, here, the time required for NCR to switch the beam is assumed to be Y. The time unit of Y may be one of a slot, a symbol, a subframe, a second, a millisecond (ms), and a microsecond (µs).

Y may be a predefined value, a value configured by control information or the like, or a value that is the subject of the Capability of NCR. In other words, this assumption corresponds to the fact that the NCR cannot switch the beam in a time shorter than Y. Note that the term "predefined" may refer to being defined by a specification or may refer to being defined by an implementation (for example, a configuration of NCR). Further, the term "configured" may refer to being configured by a parameter explicitly indicated by received control information or the like, or may refer to being configured by a parameter implicitly indicated. Here, the control information may be side control information or may be another control information obtained by RRC, MAC CE, or DCI. Further, being the subject of the capability may refer to being a subject indicated by NCR to NW (for example, gNB) as a capability.

Three options will be described below with reference to the drawings for the relationship between X and Y in a case where the NCR receives the side control information including the indication of the beam and the indication of the application time of the beam. Note that any of the following three options may be applied.

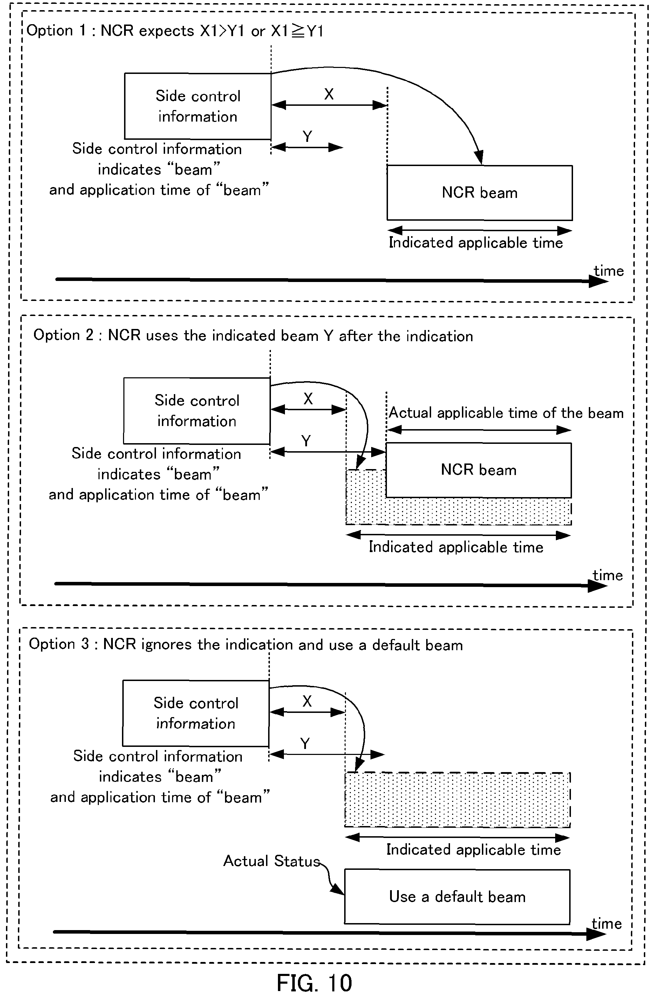

FIG. 10 is a diagram illustrating examples of Proposal 3. FIG. 10 illustrates examples of Options 1 to 3 of Proposal 3. Each example illustrates the time (timing) at which side control information indicating a certain beam to NCR and explicitly indicating the application time of the beam is received, and the time ("NCR beam" in FIG. 10) in which the NCR uses the beam in response to the indication. Further, each example illustrates X, which represents the gap between the time of the side control information and the start time of the application time of the beam indicated by the side control information, and Y1, which represents a time required for the NCR to switch the beam.

### <Option 1 of Proposal 3>

In Option 1 of Proposal 3, NCR may assume that there is a limitation on the magnitude relationship between X and Y. For example, NCR assumes that X is greater than Y (that is, X> Y) or that X is equal to or greater than Y (that is, X ≥ Y). In other words, in Option 1 of Proposal 3, NCR need not assume that X is less than Y (X < Y) or that X is equal to or less than Y (that is, X ≤ Y).

Further, in Option 1 of Proposal 3, the NW that transmits an indication to the NCR indicates X that is greater than Y or X that is equal to or greater than Y. Further, in Option 1 of Proposal 3, the NW that transmits an indication to the NCR does not indicate X that is less than Y or X that is equal to or less than Y Note that X may be indicated explicitly or implicitly by the NW.

As illustrated in the example of Option 1 in FIG. 10, X, which represents the gap between the time at which the side control information is received and the start time of the application time of the beam indicated by the side control information, is greater than Y. In this case, the NCR uses the indicated beam in the application time of the beam based on the indication ("Indicated applicable time" in the drawing).

In Option 1 of Proposal 3, by assuming that X is greater than Y or X is equal to or greater than Y, X that is less than Y or X that is equal to or less than Y is not indicated to NCR. This makes it possible to secure the time required for NCR to switch the beam and to complete the beam switching at the indicated timing, thereby controlling an appropriate operation.

### <Option 2 of Proposal 3>

In Option 2 of Proposal 3, there may be no limitation on the magnitude relationship between X and Y. For example, NCR need not assume that there is a limitation on the magnitude relationship between X and Y. In this case, X may be less than Y, or X may be equal to or greater than Y. Then, in Option 2 of Proposal 3, in a case where X < Y (or in a case where X ≤ Y), NCR may be assumed to use the indicated beam after Y elapses after the reception of the side control information, and need not be assumed to use the indicated beam before Y elapses after the reception of the side control information. Note that, the phrase "NCR need not be assumed to use the indicated beam before Y elapses after the reception of the side control information" may be interpreted as that NCR need not required to use the indicated beam before Y elapses after the reception of the side control information. Further, using the indicated beam may correspond to switching to the indicated beam.

Further, in Option 2 of Proposal 3, the NW that transmits an indication to NCR may indicate X that is less than Y or X that is equal to or less than Y. Note that X may be indicated explicitly or implicitly by the NW. For example, the NW that transmits an indication common to a plurality of NCRs may have a possibility that the NW indicates an X less than Y of a specific NCR to the plurality of NCRs including the specific NCR.

In the example of Option 2 in FIG. 10, X, which represents the gap between the time at which the side control information is received and the start time of the application time of the beam indicated by the side control information, is less than Y. In this case, as illustrated in the example of Option 2 in FIG. 10, NCR may start using the indicated beam after Y elapses after the reception of the side control information, not starting the use of the indicated beam before Y elapses after the reception of the side control information. Further, in this case, the NCR uses the indicated beam in an actual application time of the beam ("Actual applicable time of the beam" in the drawing) that is shorter than the application time of the beam ("Indicated applicable time" in the drawing) based on the indication.

Note that, in the example of Option 2 in FIG. 10, since Y is greater than X, the start timing of the actual application time of the beam is shifted to the timing later than the start timing of the application time of the beam based on the indication. Further, in the example of Option 2 in FIG. 10, the end timing of the actual application time of the beam aligns with the end timing of the application time of the beam based on the indication. As described above, even in a case where the start timing of the application time of the beam is shifted, the end timing of the actual application time of the beam aligns with the end timing of the application time of the beam based on the indication, thereby allowing the application period of the beam to be ended based on the indication.

Note that, in the example of Option 2 in FIG. 10, the end timing of the actual application time of the beam aligns with the end timing of the application time of the beam based on the indication, but the present disclosure is not limited thereto. For example, the end timing of the application time of the beam may be shifted depending on a shift in the start timing of the application time of the beam. By shifting the end timing of the application time of the beam depending on the shift in the start timing of the application time of the beam, the length of the actual application time of the beam can be the same as the length based on the indication.

In Option 2 of Proposal 3, even in a case where X that is less than Y, or X that is equal to or less than Y, is indicated to NCR, the beam is used after Y has elapsed. Thus, it is possible to secure the time required for the NCR to switch the beam and to control an appropriate operation.

### <Option 3 of Proposal 3>

In Option 3 of Proposal 3, there may be no limitation on the magnitude relationship between X and Y, similarly to Option 2 of Proposal 3. Then, in Option 3 of Proposal 3, in a case where X < Y (or in a case where X ≤ Y), NCR may ignore the side control information including the indication of the beam. In this case, for example, the NCR may ignore the side control information and use a specific beam in the application period indicated by the side control information. The specific beam may be a default beam. The default beam may be determined according to a predetermined rule. Alternatively, the specific beam in this case may depend on the implementation of NCR. Alternatively, the specific beam may be a beam used before the side control information is received or used in an application period before the application period indicated by the side control information. Alternatively, in this case, NCR may ignore the side control information and stop using the beam. The stopping of the use of the beam may correspond to, for example, performing communication (for example, transfer) without performing the directivity control, or may correspond to stopping the communication (for example, transfer).

Note that, in a case where the side control information includes information different from the indication of the beam, the NCR need not ignore the information different from the indication of the beam.

Further, in Option 3 of Proposal 3, the NW that performs indication to NCR may indicate X that is less than Y, or X that is equal to or less than Y, similarly to Option 2. Note that X may be indicated explicitly or implicitly by the NW. For example, the NW that transmits an indication common to a plurality of NCRs may have a possibility that the NW indicates an X less than Y of a specific NCR to the plurality of NCRs including the specific NCR.

In the example of Option 3 in FIG. 10, X, which represents the gap between the time at which the side control information is received and the start time of the application time of the beam indicated by the side control information, is less than Y. In this case, as illustrated in the example of Option 3 in FIG. 10, NCR ignores the side control information including the indication of the beam and uses a default beam without using the indicated beam in the application time of the indicated beam ("Indicated applicable time" in the drawing).

In Option 3 of Proposal 3, when X less than Y or X equal to or less than Y is indicated to NCR, the NCR does not use the indicated beam in the application time of the indicated beam. Thus, it is possible to select an operation of not using the indicated beam in a case where the time required for NCR to switch the beam to the indicated beam cannot be ensured, and thus, an appropriate communication operation (for example, a transfer operation) can be controlled.

Note that, in Proposal 3 described above, X need not be indicated. In this case, NCR may start using the beam indicated by the side control information after Y elapses after the reception of the side control information. Note that, in this case, the side control information need not include an indication (for example, X) related to the application time of the beam.

As described above, Proposal 3 defines a gap between the time at which NCR receives the indication and the time at which the NCR starts using the beam based on the indication in a case where the NCR receives an indication related to the beam, as an example of the timing for starting the use of the beam based on the indication. Thus, it is possible to consider that NCR requires a specific time to switch the beam, and it is possible to consider a gap between the time at which NCR receives the side control information and the application time of the beam. Therefore, the communication operation (for example, the transfer operation) can be appropriately controlled.

For example, in a case where this gap is considered, the communication operation (transfer operation) using the beam that takes the presence of the gap into consideration can be controlled between the NW that has transmitted an indication of the beam to NCR and the NCR that has received the indication.

For example, in a case where a gap is considered, it is possible to avoid inconsistency between the start timing of the application time of the beam recognized by the NW that has transmitted an indication of the beam to the NCR and the start timing of the actual application time of the beam after the gap. Avoiding inconsistency in the timing allows the NW to recognize the time in which the beam is not used, an appropriate communication operation (for example, a transfer operation) can be performed, the deterioration of the communication quality can be avoided, and a decrease in the throughput can be avoided.

### <Proposal 4>

As described above, Proposal 1 describes an example of switching power, and Proposal 2 describes an example of switching beams. The present disclosure is not limited thereto, and for example, both the power and the beam may be switched. Hereinafter, in Proposal 4, an example in which both the power and the beam are switched will be described.

In a case where the NCR switches both the power and the beam, a specific time should be considered for the switching, as in Proposals 1 and 2. Accordingly, in the following, a time for switching from a state in which the power of NCR is a certain first power and the beam of NCR is a certain first beam to a state in which the power of NCR is a certain second power and the beam of NCR is a certain second beam is defined. Note that the time of switching in Proposal 4 may be referred to as a transient period, similarly to Proposals 1 and 2.

The transient period in Proposal 4 may be defined based on at least one of the transient period in Proposal 1, that is, the time required for NCR to perform the power switching, and the transient period in Proposal 2, that is, the time required for NCR to perform the switching between two beams. For example, the transient period in Proposal 4 may be the same as the transient period in Proposal 1, the same as the transient period in Proposal 2, or the same as the longer transient period between the transient period in Proposal 1 and the transient period in Proposal 2.

Further, referring to Proposal 1 and Proposal 2, the transient period in Proposal 4 may be defined based on at least one of the former power, the former beam, the latter power, and the latter beam. For example, the transient period in Proposal 4 may be defined based on the difference between the former power and the latter power, or may be defined based on the combination of the former beam and the latter beam.

For example, the transient period may be defined for each of a case where the power is switched without switching the beam, a case where the beam is switched without switching the power, and a case where both the beam and the power are switched. For example, the NCR may indicate a capability indicating the transient period of each case.

### <Proposal 5>

In Proposal 2, an example in which a beam being switched is indicated has been described. The indication of the beam may be performed for each time unit, or each beam of one or more time units may be indicated as a pattern.

Further, for example, as shown in Proposal 2-2 and the like, a gap period is possibly provided between a period in which a certain beam is used (for example, the former beam period) and a period in which another beam is used (for example, the latter beam period) or the like. As described above, the gap period may be considered even in a case where each beam of one or more time units is indicated as a pattern.

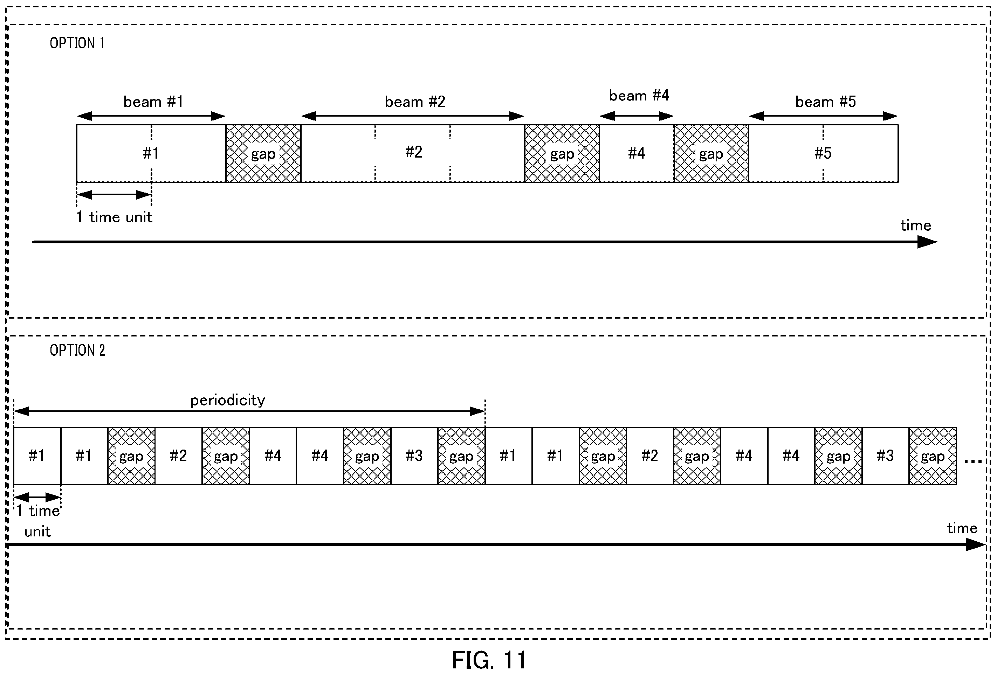

Accordingly, in Proposal 5, a method for performing an indication of a beam in consideration of a gap period will be described with reference to FIG. 11.

FIG. 11 is a diagram illustrating examples of beam indication considering a gap period. FIG. 11 illustrates patterns indicating a beam to be used in each of a plurality of time units. FIG. 11 illustrates two patterns of Option 1 and Option 2 to be described later.

### <Option 1 of Proposal 5>

In Option 1 of Proposal 5, a list of time units related to the period (beam period) in which each indicated beam is used and the gap period is indicated. For example, a list for a time resource is indicated.

In the example of Option 1 in FIG. 11, exemplary beam periods and gap periods distinguished in a time unit is illustrated. As illustrated in the example of Option 1 in FIG. 11, the beam period in which each beam is used and the gap period each have a period of one or a plurality of time units. An indicator indicating whether each time unit is a gap period and/or an indicator indicating a beam to be used may be indicated to NCR. Further, for example, a list of time units (in FIG. 11, a list composed of 11 time units) may be indicated. In other words, the list of time units shows one or more time units (11 time units in FIG. 11) in a certain specific time interval. Further, the indicator may indicate, for each time unit (each of the 11 time units in FIG. 11), whether the time unit indicates a beam to be used or a gap period.

Note that the indication of the indicator may be performed by RRC signaling, MAC CE signaling, or DCI.

The list of time units may be indicated as the number of continuous time units by the start timing and the time length. Alternatively, the list of time units may be indicated as a list of identifiers (IDs) of time units.

The list of time units may be defined in advance. For example, the start timing and/or the time length may be defined in advance.

### <Option 2 of Proposal 5>

In Option 2 of Proposal 5, a periodic pattern of a beam period and a gap period is indicated by the gNB. For example, the periodicity and offset of the pattern may be indicated. For example, a list for a time resource is indicated. For example, the list may be indicated for each time unit in the period of the pattern.

For example, information indicating one periodic pattern, the period of the pattern, and the offset of the pattern (for example, the offset from a certain time point to the start timing, the offset from a certain time point to the end timing, and/or the like) may be indicated.

An example of Option 2 in FIG. 11 illustrates a beam period and a gap period distinguished in a time unit. As illustrated in the example of Option 2 in FIG. 11, the beam period in which each period is used and the gap period each have a period of one or more time units. Then, a pattern including the beam period and the gap period is periodically repeated.

A beam to be used in each time unit or an indicator indicating whether the time unit is a gap period may be indicated to NCR.

Note that the indication of the indicator may be performed by RRC signaling, MAC CE signaling, or DCI.

The granularity of the offset and the period may be in a subframe unit, slot unit, or symbol unit. Alternatively, the granularity of the offset and the period may be in a subframe group unit, slot group unit, or symbol group unit.

The period and offset of the pattern may be defined in advance.

Note that, in Proposal 5, the time unit may be at least one of a slot, a symbol, a subframe, a subframe group, a slot group, and a symbol group. The subframe group may be a group including one or more subframes. The slot group may be a group including one or more slots. The symbol group may be a group including one or more symbols.

### <Capability of NCR>

In NCR, a capability (for example, capability information) may be defined. The capability defined for the NCR may be the same as or different from the capability defined for the UE. For example, the capabilities defined for the NCR may include at least one or some of the capabilities defined for the UE. Further, the capabilities defined for the UE may include at least one or some of the capabilities defined for the NCR. Further, at least one or some of the capabilities defined for the UE may implicitly or explicitly indicate at least one or some of the capabilities defined for the NCR.

For example, the following capabilities may be defined for NCR.
- Whether power control for NCR-Fwd is supported
- Transient period required for power variation in NCR
- Whether a gap period between power switching is supported
- Whether beam control for NCR-Fwd is supported
- Transient period required for beam variation in NCR
- Whether a gap period between beam switching is supported
- Whether the operation described in each proposal and each option of the proposals described above are possible

Note that, the transient period required for the power switching in the capability may be the maximum value or the minimum value of the transient period required for the power switching in the NCR. Alternatively, the transient period required for this switching may be defined for each power (transmission power) or for each combination of power before and after the switching.

Further, the transient period required for beam switching in the capability may be the maximum value or the minimum value of the transient period required for beam switching in the NCR. Alternatively, the transient period required for this switching may be defined for each beam or for each combination of beams before and after the switching.

For example, each of the above-described proposals may be applied in a case where the function corresponding to the proposal is supported by NCR and/or in a case where the function corresponding to the proposal is activated by a parameter of a higher layer.

Note that, in the above-described embodiment, turning "ON" may be read as being active, valid, enabled, activated, or the like, and turning "OFF" may be read as being inactive, invalid, disabled, sleep, or the like. The term "signal" may be read as information, control information, indication, or the like.

### (Apparatus Configuration)

Next, an exemplary functional configuration of base station 100 and terminal 200 that execute the processing and operations described so far will be described. Base station 100 and terminal 200 may have functions for implementing the embodiment described above. Note that base station 100 and terminal 200 may each have only some of the functions described in the embodiment.

### <Base Station>

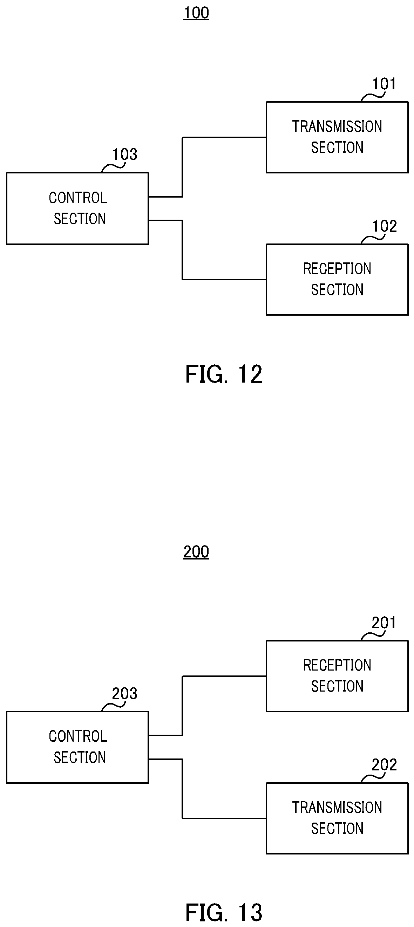

FIG. 12 is a block diagram illustrating an exemplary configuration of base station 100 according to an embodiment of the present disclosure. The base station includes, for example, transmission section 101, reception section 102, and control section 103. Base station 100 communicates with terminal 200 (see FIG. 13) by radio. Note that, transmission section 101 and reception section 102 may be collectively referred to as a communication section.

Transmission section 101 transmits the DL signal to terminal 200. For example, transmission section 101 transmits a DL signal under the control of control section 103. For example, the DL signal may include information indicating scheduling related to signal transmission of terminal 200 (for example, UL grant), control information of a higher layer, and the like.

For example, transmission section 101 transmits various control signals (such as control signals in the RRC layer), reference signals, data signals, and the like as DL signals to terminal 200 and/or relay apparatus 300. Transmission section 101 transmits, for example, various signals, channels, configuration information, control information, and the like described in the above embodiment to terminal 200 as DL signals.

For example, transmission section 101 transmits information related to the control of terminal 200 and/or information related to the control of relay apparatus 300, which are generated by control section 103, to terminal 200. Further, transmission section 101 transmits the data signal generated by control section 103 to terminal 200.

Reception section 102 receives a UL signal transmitted from terminal 200. For example, reception section 102 receives a UL signal under the control of control section 103. Further, reception section 102 may receive a UL signal transmitted from relay apparatus 300.

For example, reception section 102 receives, as a UL signal, a signal including terminal capability information (for example, UE capability) of terminal 200, various control signals, reference signals, data signals, and the like from terminal 200. Further, reception section 102 may receive a signal including capability information of relay apparatus 300 (for example, the capability of NCR).

Control section 103 controls the overall (communication) operation of base station 100, including the transmission processing in transmission section 101 and the reception processing in reception section 102.

For example, control section 103 acquires information such as data and control information from a higher layer and outputs the information to transmission section 101. Further, control section 103 outputs the data and control information received from reception section 102 to a higher layer.

For example, control section 103 allocates resources for the transmission and reception of DL signals and/or resources for the transmission and reception of UL signals based on signals (for example, data, control information, and the like) received from terminal 200 and/or data and control information acquired from a higher layer. Information on the allocated resource may be included in control information to be transmitted to terminal 200.

Control section 103 executes operations other than the transmission and reception described in the above embodiment (the operations may be executed by transmission section 101 and/or reception section 102).

For example, control section 103 may generate control information related to the transfer operation of relay apparatus 300. Further, control section 103 may perform resource allocation of the resource to be allocated to relay apparatus 300.

### <Terminal>

FIG. 13 is a block diagram illustrating an exemplary configuration of terminal 200 according to an embodiment of the present disclosure. Terminal 200 includes, for example, reception section 201, transmission section 202, and control section 203. Terminal 200 communicates with, for example, base station 100 (see FIG. 12) by radio. Note that, reception section 201 and transmission section 202 may be collectively referred to as a communication section.

Reception section 201 receives a DL signal transmitted from base station 100. For example, under the control of control section 203, reception section 201 receives a DL signal.

For example, reception section 201 receives various control signals, reference signals, data signals, and the like from base station 100 as DL signals. Reception section 201 receives, for example, various signals, channels, configuration information, control information, and the like described in the above embodiment as DL signals from base station 100.

For example, reception section 201 receives a signal from base station 100.

Transmission section 202 transmits a UL signal to base station 100. For example, transmission section 202 transmits a UL signal under the control of control section 203.

For example, transmission section 202 transmits, as a UL signal, a signal including information on the processing capability of terminal 200, various control signals, reference signals, data signals, and the like to base station 100.

Control section 203 controls the overall (communication) operation of terminal 200, including the reception processing in reception section 201 and the transmission processing in transmission section 202.

For example, control section 203 acquires information such as data and control information from a higher layer and outputs the information to transmission section 202. Further, control section 203 outputs, for example, data and control information received from reception section 201 to a higher layer.

Control section 203 executes operations other than the transmission and reception described in the above embodiment (note that the operations may be executed by reception section 201 and/or transmission section 202).

### <Relay Apparatus>

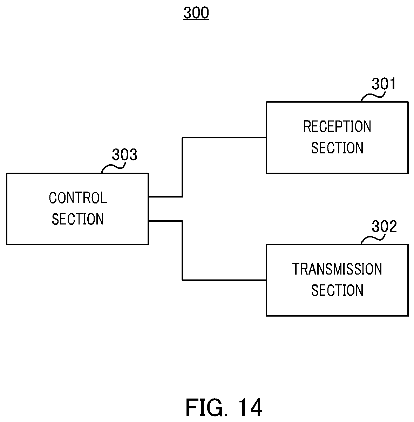

FIG. 14 is a block diagram illustrating an exemplary configuration of relay apparatus 300 according to the embodiment of the present disclosure. Relay apparatus 300 corresponds to an example of NCR. Relay apparatus 300 includes, for example, reception section 301, transmission section 302, and control section 303. Relay apparatus 300 communicates with, for example, base station 100 (see FIG. 12) and terminal 200 (see FIG. 13) by radio. Note that, reception section 301 and transmission section 302 may be collectively referred to as a communication section.

Reception section 301 receives a DL signal transmitted from base station 100. Further, reception section 301 receives a UL signal transmitted from terminal 200. For example, reception section 301 receives a DL signal and a UL signal under the control of control section 303. Note that the signal to be received may include a signal addressed to base station 100, a signal addressed to terminal 200, and a signal addressed to relay apparatus 300.

Transmission section 302 transmits the UL signal which is received from terminal 200 and is addressed to base station 100, to base station 100. Further, transmission section 302 transmits the DL signal which is received from base station 100 and is addressed to terminal 200, to terminal 200. For example, transmission section 302 transmits the UL signal under the control of control section 303.

Control section 303 controls the overall (communication) operation of relay apparatus 300, including the reception processing in reception section 301 and the transmission processing in transmission section 302.

For example, control section 303 acquires information such as data and control information from a higher layer and outputs the information to transmission section 302. Further, control section 303 outputs, for example, data and control information received from reception section 301 to a higher layer.

Control section 303 executes operations other than the transmission and reception described in the above embodiment (note that the operations may be executed by reception section 301 and/or transmission section 302).

Further, in FIG. 14, a configuration is illustrated in which one of each of reception section 301, transmission section 302, and control section 303 is included, but the present disclosure is not limited thereto. For example, as described above, relay apparatus 300 (for example, NCR 300) includes two functional entities: NCR-MT, which performs communication in the C-link; and NCR-Fwd, which performs communication in the access link and the backhaul link. Therefore, relay apparatus 300 may include a reception section, a transmission section, and a control section for each of NCR-MT and NCR-Fwd. Further, relay apparatus 300 may include a reception section, a transmission section, and a control section for each communication of the C-link, the access link, and the backhaul link.

Note that relay apparatus 300 (for example, NCR) in the present disclosure may be an example of a communication apparatus. Further, relay apparatus 300 in the present disclosure may be referred to by another name such as a transfer apparatus. Further, relay apparatus 300 in the present disclosure may be replaced with terminal 200 (for example, UE). For example, relay apparatus 300 may be regarded as terminal 200 having a transfer function (or a relay function).

### (Summary of Embodiment)

According to an embodiment of the present disclosure, a communication apparatus is provided, including: a control section that configures, in a case where transmission power related to a communication operation executed by the communication apparatus between a base station and a terminal is switched to first power, a specific period before a first period in which the first power is used, and switches the transmission power to the first power; and a communication section that transmits a signal in accordance with the first power.

With the above configuration, the power related to the communication operation is appropriately changed in the specific period, and thus, an appropriate communication operation (transfer operation) can be controlled.

In the present communication apparatus, the control section configures, in a case of switching from second power different from the first power to the first power, the specific period between a second period in which the second power is used and the first period in which the first power is used, and the specific period is defined based on a time required for switching from the second power to the first power.

With the above configuration, the power related to the communication operation is appropriately changed in the specific period between two periods, and thus, an appropriate communication operation (transfer operation) can be controlled.

In the present communication apparatus, the control section configures the specific period in at least one of a period for which use of the first power is indicated and a period for which use of the second power is indicated.

In the present communication apparatus, the control section performs switching to the first power in a case where a third period between the second period and the first period is greater than a specific value.

In the present communication apparatus, the control section does not perform switching to the first power in a case where a third period between the second period and the first period is not greater than a specific value.

According to an embodiment of the present disclosure, a communication method is provided, including: configuring, by a communication apparatus, in a case where transmission power related to a communication operation executed by the communication apparatus between a base station and a terminal is switched to first power, a specific period before a first period in which the first power is used, and switching the transmission power to the first power; and transmitting, by the communication apparatus, a signal in accordance with the first power.

With the above configuration, the power related to the communication operation is appropriately changed in the specific period, and thus, an appropriate communication operation (transfer operation) can be controlled.

According to an embodiment of the present disclosure, a communication apparatus is provided, including: a control section that configures, in a case where a beam related to a communication operation executed by the communication apparatus between a base station and a terminal is switched to a first beam, a specific period before a first period in which the first beam is used, and switches the beam to the first beam; and a communication section that performs transmission or reception of a signal using the first beam.

With the above configuration, the beam related to the communication operation is appropriately changed in the specific period, and thus, an appropriate communication operation (transfer operation) can be controlled.

In the present communication apparatus, the control section configures, in a case of switching from a second beam different from the first beam to the first beam, the specific period between a second period in which the second beam is used and the first period in which the first beam is used, and the specific period is defined based on a time required for switching from the second beam to the first beam.

With the above configuration, the beam related to the communication operation is appropriately changed in the specific period between two periods, and thus, an appropriate communication operation (transfer operation) can be controlled.

In the present communication apparatus, the control section configures the specific period in at least one of a period for which use of the first beam is indicated and a period for which use of the second beam is indicated.

In the present communication apparatus, the control section does not perform switching to the first beam in a case where a third period between the second period and the first period is not greater than a specific value.

In the present communication apparatus, the control section configures, in a case of receiving an indication indicating the first beam, the specific period between a time when the indication is received and a time when the first period is started.

According to an embodiment of the present disclosure, a communication method is provided, including: configuring, by a communication apparatus, in a case where a beam related to a communication operation executed by the communication apparatus between a base station and a terminal is switched to a first beam, a specific period before a first period in which the first beam is used, and switching the beam to the first beam; and performing, by the communication apparatus, transmission or reception of a signal using the first beam.

Note that relay apparatus 300 (for example, NCR) in the present disclosure may be read as a base station. In this case, base station 100 may have the functions described above that relay apparatus 300 has. Further, relay apparatus 300 (for example, NCR) in the present disclosure may be read as a terminal. In this case, terminal 200 may have the functions described above that relay apparatus 300 has.

The present disclosure has been described above. The division of the items in the above description is not essential to the present disclosure, and matters described in two or more items may be combined and used as necessary, and a matter described in one item may be applied to a matter described in another item (as long as the maters do not contradict each other).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

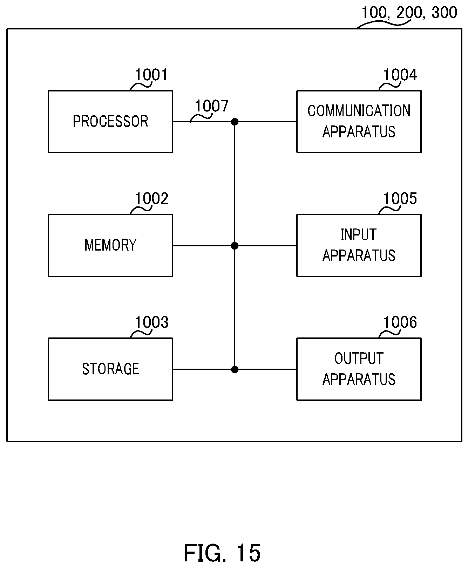

For example, a base station, a terminal, a relay apparatus (e.g., NCR), and so on according to one embodiment of the present disclosure may function as a computer that executes the processes of the radio communication method of the present disclosure. FIG. 15 is a diagram to show an example of a hardware structure of a base station, a terminal, and a relay apparatus according to one embodiment of a present disclosure. Physically, the above-described base station 100, terminal 200, and relay apparatus 300 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100, terminal 200, and relay apparatus 300 may be configured to include one or more of apparatuses shown in the drawings, or may be configured not to include part of apparatuses

Each function of base station 100, terminals 200, and relay apparatus 300 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103 or control section 203, control section 303, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, base station 100, terminal 200, and relay apparatus 300 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, transmission section 202, transmission section 302, reception section 102, reception section 201, reception section 301, and the like, may be realized by communication apparatus 1004. Communication apparatus 1004 may be implemented by physically or logically divided into a transmission section and reception section.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100, terminals 200, and relay apparatus 300 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Supplement to Embodiment)

While the embodiment of the present disclosure has been described above, the disclosed invention is not limited to such an embodiment, and a person skilled in the art would understand various variations, modifications, alternatives, substitutions, and the like. Specific numerical examples have been used in the description to facilitate understanding of the invention, but unless otherwise noted, these numbers are merely examples and any suitable values may be used. The division of the items in the above description is not essential to the present disclosure, and matters described in two or more items may be combined and used as necessary, and matters described in one item may be applied to matters described in another item (as long as they do not contradict each other). The boundaries of the functional sections and processing sections in the functional block diagram do not necessarily correspond to the boundaries of physical components. The operations of a plurality of functional sections may be performed physically by one component, or the operation of one functional section may be performed physically by a plurality of components. The processing procedures described in the embodiment may be performed in a different order as long as there is no contradiction. For convenience of description of the processing, base station 100, terminal 200, and relay apparatus 300 have been described using functional block diagrams, but such apparatuses may be implemented in hardware, software, or a combination thereof. Software that operates on a processor included in base station 100 according to an embodiment of the present disclosure, software that operates on a processor included in terminal 200 according to an embodiment of the present disclosure, and software that operates on a processor included in relay apparatus 300 according to an embodiment of the present disclosure may each be stored in any suitable storage medium, such as a random access memory (RAM), a flash memory, a read-only memory (ROM), an erasable programmable read-only memory (EPROM), an electrically erasable programmable read-only memory (EEPROM), a register, a hard disk (HDD), a removable disk, a CD-ROM, a database, a server, or the like.

### <Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). **In** this case, terminals 200 may have the functions of base stations 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 100 may have the functions of terminal 200 described above.

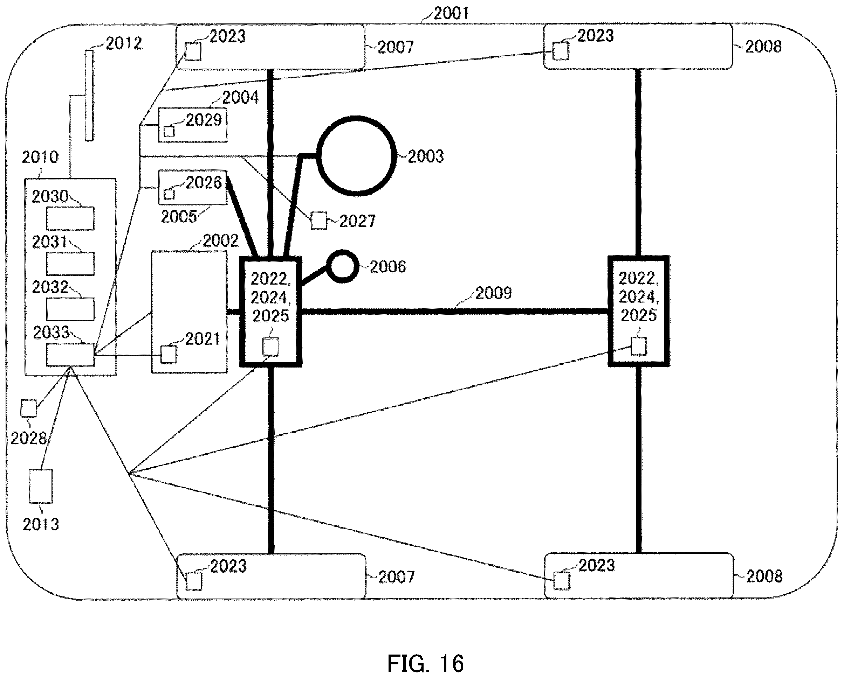

FIG. 16 shows an example of a configuration of vehicle 2001. As shown in FIG. 16, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 2029 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on the PDSCH received by communication module 2013 (or data/information decoded from the PDSCH)). In addition, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, sensors 2021 to 2029 etc., mounted in vehicle 2001.

### <Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of') as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. APRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a", "an", and "the", the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Radio communication system
20 NG-RAN
100 Base station (gNB)
200 Terminal (UE)
300 Relay apparatus (NCR)
101, 202, 302 Transmission section
102, 201, 301 Reception section
103, 203, 303 Control section
1001 Processor
1002 Memory
1003 Storage
1004 Communication apparatus
1005 Input apparatus
1006 Output apparatus
1007 Bus

## Claims

1. A communication apparatus, comprising:
a control section that configures, in a case where transmission power related to a communication operation executed by the communication apparatus between a base station and a terminal is switched to first power, a specific period before a first period in which the first power is used, and switches the transmission power to the first power; and
a communication section that transmits a signal in accordance with the first power.

2. The communication apparatus according to claim 1, wherein
the control section configures, in a case of switching from second power different from the first power to the first power, the specific period between a second period in which the second power is used and the first period in which the first power is used, and
the specific period is defined based on a time required for switching from the second power to the first power.

3. The communication apparatus according to claim 2, wherein
the control section configures the specific period in at least one of a period for which use of the first power is indicated and a period for which use of the second power is indicated.

4. The communication apparatus according to claim 2, wherein
the control section performs switching to the first power in a case where a third period between the second period and the first period is greater than a specific value.

5. The communication apparatus according to claim 2, wherein
the control section does not perform switching to the first power in a case where a third period between the second period and the first period is not greater than a specific value.

6. A communication method, comprising:
configuring, by a communication apparatus, in a case where transmission power related to a communication operation executed by the communication apparatus between a base station and a terminal is switched to first power, a specific period before a first period in which the first power is used, and switching the transmission power to the first power; and
transmitting, by the communication apparatus, a signal in accordance with the first power.
